(19) Europäisches Patentamt / European Patent Office / Office européen des brevets

(11) EP 2 346 599 B1

(12) # FASCICULE DE BREVET EUROPEEN

(45) Date de publication et mention de la délivrance du brevet:
**12.12.2012 Bulletin 2012/50**

(21) Numéro de dépôt: **09756329.0**

(22) Date de dépôt: **20.10.2009**

(51) Int Cl.:
***B01J 13/10*** *(2006.01)*

(86) Numéro de dépôt international:
**PCT/FR2009/001225**

(87) Numéro de publication internationale:
**WO 2010/046560 (29.04.2010 Gazette 2010/17)**

(54) **VESICULES CATANIONIQUES, LEUR PROCEDE DE PREPARATION ET LEURS APPLICATIONS**

KATIONISCHE VESIKEL, HERSTELLUNGSVERFAHREN DAFÜR UND ANWENDUNGEN DAVON

CATANIONIC VESICLES, PROCESS FOR PREPARING SAME AND APPLICATIONS THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.10.2008 FR 0805806**

(43) Date de publication de la demande:
**27.07.2011 Bulletin 2011/30**

(73) Titulaire: **Commissariat à l'Énergie Atomique et aux Énergies Alternatives**
**75015 Paris (FR)**

(72) Inventeurs:
- **CARRIERE, David**
  **F-92340 Bourg-la-Reine (FR)**
- **MICHINA, Youlia**
  **F-69007 Lyon (FR)**
- **KOPETZKI, Daniel**
  **13347 Berlin (DE)**

(74) Mandataire: **Mena, Sandra et al**
**Cabinet Orès**
**36, rue de St Pétersbourg**
**75008 Paris (FR)**

(56) Documents cités:
**EP-A- 1 116 516**
**FR-A- 2 866 246**
**FR-A- 2 880 032**

- **WESCHAYANWIWAT P ET AL: "Benzene removal from waste water using aqueous surfactant two-phase extraction with cationic and anionic surfactant mixtures" CHEMOSPHERE, PERGAMON PRESS, OXFORD, GB, vol. 72, no. 7, 1 juillet 2008 (2008-07-01), pages 1043-1048, XP022734197 ISSN: 0045-6535 [extrait le 2008-06-02]**
- **EMILY J. DANOFF E.A.: "Surfactant Vesicles for High-Efficiency Capture and Separation of Charged Organic Solutes" LANGMUIR, vol. 23, 21 juillet 2007 (2007-07-21), pages 8965-8971, XP002533139**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 346 599 B1

## Description

La présente Invention est relative à des vésicules catanioniques, c'est-à-dire des vésicules dont les parois sont constituées d'un mélange de tensioactifs de charges opposées. Elle concerne également un procédé pour leur préparation et leurs utilisations, notamment dans le domaine de la pharmacie, de la cosmétique, dans le secteur de la dépollution des milieux aqueux ou dans le domaine de la synthèse de nanoparticules.

Les mélanges de tensioactifs anioniques et cationiques en milieu aqueux donnent naissance à ce qu'il est convenu d'appeler des solutions "catanioniques".

Après appariement ionique, les contre-ions forment un sel en excès et induisent une conductivité élevée des échantillons qui masque les interactions électrostatiques. Un type particulier de formulation catanionique exempte de sels est obtenu en utilisant uniquement des contre-ions $H^+$ et $OH^-$, de telle sorte qu'aucun excès de sel n'est formé par le mélange des deux tensioactifs (Dubois M. et al., C. R. Acad. Sci. Paris II C, 1998, 1(9) 567-565). Les systèmes catanioniques résultants sont couramment appelés "systèmes catanioniques vrais".

Lorsque les solutions catanioniques sont chauffées à une température supérieure à la température de fusion des chaînes, les tensioactifs anioniques et cationiques s'auto-assemblent sous la forme de micelles stables de formes variées (sphères, cylindres ou encore bicouches pliées). En fonction des proportions relatives entre constituants cationiques et anioniques, différentes formes de structures peuvent être ensuite obtenues lors du refroidissement de ces solutions.

Différentes structures obtenues à partir de solutions catanioniques ont été observées et décrites, notamment dans Zemb T. et al., Science, 1999, 283, 816-819 ; Dubois M. et al., Nature, 2001, 411, 672-675 ; WO2005/089927 ; EP-1 846 152.

Les différentes structures décrites dans ces documents sont des formulations catanioniques exemptes de sels, obtenues en utilisant uniquement des contre-ions $H^+$ et OH. Et ces formulations sont obtenues par un procédé qui comprend une étape de mélange qui peut être longue (1 heure à plusieurs jours), et une étape de chauffage du mélange qui est très brève (une minute). Ces conditions opératoires conduisent à des structures sous forme de membranes, nanodisques, polyèdres qui présentent la caractéristique d'être poreuses. Les échanges entre la partie interne de la vésicule et le milieu dans lequel elle est diluée, généralement une solution aqueuse, sont rapides et les substances contenues dans la cavité interne de la vésicule sont rapidement diffusées vers l'extérieur, voir Glinel, K. et al., Langmuir, 2004, 20, 8546-8551.

Il n'est donc pas possible avec de telles vésicules de créer un gradient de pH entre le milieu externe et la cavité interne des vésicules, car les deux milieux s'équilibrent très rapidement. Or, il existe des principes actifs organiques dont la solubilisation dans un milieu aqueux ne peut se faire qu'à un pH acide ou à un pH basique. Mais l'administration de ces principes actifs à l'organisme humain ou animal requiert de les placer dans une composition sensiblement neutre. Et il subsiste donc le besoin de vésicules permettant d'encapsuler de tels actifs, ces vésicules étant elles-mêmes solubilisées en milieu sensiblement neutre.

Par ailleurs, diverses structures permettant de délivrer des principes actifs, incluant des formes à libération prolongée, ont déjà été proposées et sont basées sur l'encapsulation d'ingrédients actifs à l'intérieur de vésicules. C'est ainsi que dans ce but, un grand nombre de documents de l'art antérieur a décrit l'utilisation de vésicules sphériques constituées d'une ou de plusieurs bicouches lipidiques et communément désignées sous le nom de liposomes. Cependant l'utilisation de liposomes ne donne pas toujours entière satisfaction en termes de stabilité et dans la mesure où leur préparation met en oeuvre des procédés nécessitant l'emploi de solvants organiques dont l'utilisation n'est pas toujours compatible avec les milieux physiologiques. En outre, l'industrie cherche à éviter l'emploi de solvants organiques en grande quantité.

Le document FR 2 880 032 A décrit un procédé pour la préparation des vésicules en milieu aqueux, ce procédé comprenant une étape de mélange dans un solvant aqueux d'un tensioactif anionique à contre-ion métallique et un tensioactif cationique à contre-ion $OH^-$ et une étape de chauffage de ce mélange à une température T. FR 2 880 032 décrit aussi le résultat de ce procédé, c'est-à-dire des vésicules dans un solvant aqueux, dont les parois sont constituées d'un mélange d'un tensioactif anionique à contre-ion métallique et un tensioactif cationique à contre-ion $OH^-$.

Pour résoudre l'ensemble de ces problèmes la demanderesse a mis au point de nouvelles vésicules catanioniques dispersées dans un milieu aqueux sensiblement neutre, et dont la cavité interne contient une solution qui est soit acide, soit basique. Ces vésicules ont notamment l'avantage d'être stables, d'être facilement préparées par un procédé qui fait l'objet de la présente invention et qui ne fait pas appel à l'emploi de solvants organiques.

L'invention a pour premier objet des vésicules non poreuses en dispersion dans une composition aqueuse (phase externe) dont les parois, qui définissent une phase interne, sont constituées d'un mélange d'au moins un tensioactif anionique (TA) à contre-ion $A^+$ et d'au moins un tensioactif cationique (TC) à contre-ion $B^-$, ($A^+$, $B^-$) étant distinct de ($H^+$, $OH^-$) mais avec au moins $A^+ = H^+$ ou $B^- = OH^-$. Ces vésicules présentent l'avantage d'être faiblement perméables et, en l'absence d'actifs dissous dans leur cavité interne, de renfermer dans leur cavité interne une solution aqueuse de pH différent de celui de la phase externe d'au moins une unité de pH. Les parois des vésicules de l'invention sont

constituées des tensioactifs anioniques et cationiques auto-assemblés en une structure sensiblement sphérique faiblement perméable.

Par vésicules non poreuses ou faiblement perméables on entend des vésicules dont les parois sont capables de prévenir le passage de solutés contenus dans leur cavité interne vers la phase externe ou inversement pendant des temps suffisamment longs. La faible perméabilité des vésicules peut être contrôlée expérimentalement par la mesure à différents intervalles de temps de la concentration en protons (via le pH) ou en ions $Cl^-$, $Br^-$ dans les vésicules en contact avec un bain de dialyse, ou par la mesure de la concentration d'un soluté encapsulé dans les vésicules ajouté pendant la préparation (comme par exemple les molécules citées plus bas). L'évolution de la concentration $c_{soluté}(t)$ du soluté testé (H+, $Br^-$, $Cl^-$, autre composé) est généralement donnée par une loi exponentielle du type :

$$c_{soluté}(t) = c_{0,soluté}\, e^{-\frac{3P_{soluté}}{R}t}$$

où $R$ est le rayon moyen des vésicules, t le temps écoulé entre l'encapsulation du soluté et la mesure, $P_{soluté}$ la perméabilité des vésicules pour le soluté considéré. La faible perméabilité des vésicules de l'invention pour un soluté est constatée par la mesure d'une perméabilité inférieure à $10^{-10}$ cm/s. Par exemple, pour des vésicules d'un diamètre typique de 5 μm, cela correspond à la perte de la moitié du soluté en un temps = supérieur à 160 heures.

En général, la perméabilité d'une vésicule donnée pour un soluté donné peut différer selon le sens de passage du soluté. Notamment, pour un soluté chargé traversant la paroi d'une vésicule présentant un potentiel transmembranaire $\Delta\phi = \phi_{externe} - \phi_{interne}$, la perméabilité $P_{out}$ qui caractérise la sortie du soluté et la perméabilité $P_{in}$ qui caractérise la rentrée du soluté sont reliées par :

$$\frac{P_{out}}{P_{in}} = \exp\left(-\frac{q\Delta\phi}{kT}\right)$$

Où $q$ est la charge du soluté, $k$ la constante de Boltzmann et $T$ la température en kelvins. Ainsi, on peut observer plusieurs ordres de grandeur de différence entre la perméabilité d'un soluté chargé dans un sens et dans l'autre. Une vésicule sera considérée comme peu perméable à un soluté si au moins l'une des deux perméabilités, dans un sens ou dans l'autre, est inférieure à 5 $10^{-11}$ cm/s. Les vésicules de l'invention ont une perméabilité à $H^+$ ou à $OH^-$ qui est inférieure à 5 $10^{-11}$ cm/s.

Les vésicules de l'invention se caractérisent également par :

Le fait qu'une différence de pH d'au moins 1 unité et avantageusement 2 unités entre la phase interne et la phase externe des vésicules est conservée sur une durée d'au moins 1 mois, et préférentiellement 2 mois

Leur résistance à la dialyse : les vésicules sont résistantes à la dialyse, c'est-à-dire : elles ne sont pas détruites par la dialyse (observations par microscopie), leur composition en tensioactifs ne change pas (observé par HPLC), même si on les laisse à dialyser pendant 2100 heures. C'est un phénomène très étonnant, parce que l'homme du métier s'attendait à ce que la dialyse élimine le tensioactif soluble, et donc entraîne la destruction totale des vésicules.

En outre, on a constaté que le plus souvent, la bicouche des vésicules est cristallisée. C'est observable par diffraction des rayons x. Cela implique que les tensioactifs sont « gelés » dans la bicouche, ne s'échangent pas avec la solution extérieure, et donc les vésicules sont solides.

L'invention a également pour objet un procédé pour la préparation d'une dispersion de vésicules en milieu aqueux, ce procédé comprenant les étapes suivantes :

i) Mélange dans de l'eau d'au moins un tensioactif anionique à contre-ion $A^+$ et d'au moins un tensioactif cationique à contre-ion $B^-$, ($A^+$, $B^-$) étant distinct de ($H^+$, $OH^-$) mais avec au moins $A^+ = H^+$ ou $B^- = OH^-$ ;
ii) Chauffage de ce mélange, pendant une durée $t_{chauff}$, à une température T inférieure à la température de fusion du mélange catanionique et qui est supérieure ou égale à 40°C mais inférieure à 90°C, T et $t_{chauff}$ étant suffisantes pour obtenir la solubilisation des tensioactifs ;
iii) Dialyse de la suspension obtenue en ii) de façon à éliminer les sels de la phase externe.

De façon plus détaillée :

Le procédé de l'invention est mis en oeuvre en milieu aqueux, c'est-à-dire dans de l'eau ou dans un mélange d'eau

et d'un autre solvant miscible à l'eau. On peut par exemple utiliser des mélanges d'eau avec du glycérol (jusqu'à 30% en volume par rapport au volume d'eau) ou du DMSO (jusqu'à 3% en volume par rapport au volume d'eau). Les vésicules supportent également après leur préparation l'addition d'éthanol, de DMSO ou de glycérol en quantités modérées (moins de 1 % en volume par rapport au volume d'eau)

De préférence le procédé de l'invention est mis en oeuvre dans de l'eau.
Les tensioactifs sont choisis de la façon suivante :

Selon une première variante, qui concerne les vésicules à phase interne acide, le tensio-actif anionique est à contre-ion $H^+$ et le tensio-actif cationique est à contre-ion $B^-$, $B^-$ étant différent de $OH^-$.

Selon une seconde variante, qui concerne les vésicules à phase interne basique, le tensio-actif anionique est à contre-ion $A^+$, $A^+$ étant différent de $H^+$ et le tensio-actif cationique est à contre-ion $OH^-$.
Les tensioactifs anioniques pouvant être utilisés conformément à l'invention pour la formation des vésicules comportent un groupement polaire anionique et au moins une chaîne alkyle en $C_8$-$C_{30}$ éventuellement substituée par un ou plusieurs groupements hydroxyle et un ou plusieurs atomes d'halogène. Le groupement polaire anionique est choisi parmi les fonctions acide ou sel d'acide. Préférentiellement ces tensioactifs anioniques sont des dérivés de chaîne alkyle en $C_8$-$C_{24}$, ou hydroxyalkyle en $C_8$-$C_{24}$, ou fluoroalkyle en $C_8$-$C_{24}$. De préférence ils sont choisis parmi les acides carboxyliques à chaîne alkyle ou hydroxyalkyle en $C_8$-$C_{24}$, ou fluoroalkyle en $C_8$-$C_{24}$, les acides di-carboxyliques à chaîne hydrophobe carbonée en $C_8$-$C_{24}$, les phosphates, les sulfates et les sulfonates comportant une ou deux chaînes alkyle en $C_8$-$C_{24}$.
Le tensioactif anionique mis en oeuvre dans l'invention peut être un acide neutre qui libère un proton dans l'eau. Ainsi, l'expression « tensioactif anionique » inclut les tensioactifs ionisables en tensioactif anionique.
Parmi ces tensioactifs anioniques, on peut en particulier citer les acides gras tels que l'acide laurique, l'acide myristique, l'acide palmitique, l'acide dodécanedioïque, l'acide tétradécanedioïque, l'acide hexadécanedioïque, l'acide 12-dodécanoïque, l'acide 14-tétradecanoïque, l'acide 16-hydroxyhexadécanoïque.
Le tensioactif anionique peut éventuellement être en mélange avec un tensioactif non-ionique, préférentiellement choisi parmi des dérivés de chaîne alkyle en $C_8$-$C_{24}$, ou hydroxyalkyle en $C_8$-$C_{24}$, ou fluoroalkyle en $C_8$-$C_{24}$, comme par exemple un alcool gras ou un dérivé d'alcool gras : un hydroxyalkyle en $C_8$-$C_{24}$, un éther d'un hydrate de carbone en $C_4$-$C_{24}$ et d'un hydroxyalkyle en $C_8$-$C_{24}$. Le tensioactif non-ionique peut être introduit sans endommager les vésicules. L'utilisation de tensioactif non-ionique en mélange avec le tensioactif ionique permet de diminuer le gradient de pH entre le compartiment interne et le milieu externe.
Le tensio-actif anionique est soit à contre-ion $H^+$ (première variante), soit à contre-ion différent de $H^+$, et dans ce cas le contre-ion peut être choisi parmi les sels des métaux alcalins et alcalino-terreux, comme par exemple $Na^+$, $K^+$, $Li^+$, ainsi que les cations organiques comme $NH_4^+$, $NH_3^+OH$, $NH_3^+CH_2OH$ (seconde variante). Lors de la mise en oeuvre de la première variante, lorsque l'on souhaite faire varier le pH interne des vésicules, on choisit d'utiliser un tensioactif avec un contre-ion $H^+$ et au moins un autre contre-ion. Par exemple on peut utiliser un mélange de contre-ions, comme $H^+$ et $Na^+$.
Les tensioactifs cationiques pouvant être utilisés pour la formation des vésicules de l'invention sont des molécules comportant un groupement polaire cationique et au moins une chaîne alkyle ou aryle ou aralkyle, saturée ou insaturée, ayant de 8 à 30 atomes de carbone et éventuellement interrompue par une fonction ester ou éther. Ces tensioactifs sont de préférence choisis parmi les ammoniums mono- et bicaténaires répondant aux formules (I) et (I') suivantes et les bases correspondantes :

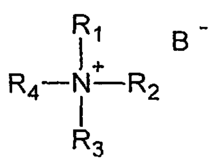 (I) 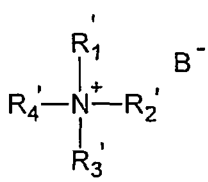 (I')

dans lesquelles :

- $R_1$, $R_2$ et $R_3$, $R'_1$ et $R'_2$, identiques ou différents, représentent un groupement choisi parmi : H, un alkyle en $C_1$-$C_4$, un hydroxyalkyle en $C_1$-$C_4$ et un alkyl($C_1$-$C_4$)éther,
- $R_4$, $R'_3$ et $R'_4$, identiques ou différents, représentent un groupement choisi parmi : une chaîne hydrocarbonée saturée ou insaturée en $C_8$-$C_{24}$, un benzyle, un aralkyle en $C_8$-$C_{24}$ ou un groupement alkyl($C_4$-$C_{20}$)ester d'alkyle($C_4$-$C_{20}$),
- $B^-$ représente un ion choisi parmi : $OH^-$ (seconde variante), $F^-$, $Cl^-$, $Br^-$, $I^-$, $BF4^-$, $SO_4^{2-}$ (première variante).

Le tensioactif cationique mis en oeuvre dans l'invention peut être une base neutre qui se protone dans l'eau. Ainsi, l'expression « tensioactif cationique » inclut les tensioactifs ionisables en tensioactif cationique.

Lors de la mise en oeuvre de la seconde variante, pour faire varier le pH interne des vésicules, on peut utiliser un tensioactif cationique avec un mélange de contre-ions, par exemple $OH^-$ et $Br^-$.

Dans les formules (I) et (I') ci-dessus; $R_1$, $R_2$, $R_3$, $R'_1$ et $R'_2$, représentent de préférence le radical méthyle.

Dans les formules (I) et (I') ci-dessus, $R'_3$, $R'_4$ et $R_4$, sont notamment choisis parmi :

- les chaînes alkyle en $C_8$-$C_{24}$ telles que par exemple les chaînes stéaryle, cétyle, dodécyle et tétradécyle ou myristyle ;
- les groupements alkyl($C_4$-$C_{20}$)ester d'alkyle($C_4$-$C_{20}$) tels que par exemple les alkyl($C_{16}$)esters d'alkyle($C_4$-$C_{20}$) et les alkyl($C_{12}$)esters d'alkyle($C_4$-$C_{20}$).
- B est avantageusement choisi parmi : $OH^-$ (seconde variante), et $Cl^-$, $Br^-$ (première variante).

Il est possible, conformément à l'Invention, d'associer n'importe quel type de tensioactif anionique avec n'importe quel type de tensioactif cationique dès lors que les contre-ions sont distincts du couple ($H^+$, $OH^-$).

Les quantités de chaque catégorie de tensioactifs dans le milieu aqueux de départ sont données en nombre de moles $n_A$ et $n_C$, désignant respectivement le nombre de moles de tensioactif anionique et le nombre de moles de tensioactif cationique.

Dans le cas de la première variante, on calcule la fraction molaire de tensioactif anionique suivant la formule :

$$r_A = \frac{n_A}{n_A + n_C}$$

La fraction $r_A$ est optionnellement choisie pour chaque couple de tensioactifs, ou de mélanges de tensioactifs en suivant le protocole suivant :

a) Les tensioactifs anionique et cationique sont mélangés dans l'eau, en choisissant une fraction $r_{A1}$ au hasard, de préférence avec un excès de tensioactif cationique ;
b) Le mélange est chauffé à une température proche, mais inférieure à la température de fusion du tensioactif anionique pendant une durée supérieure ou égale à une heure ;
c) La suspension obtenue est dialysée ;
d) Au cours de la dialyse on mesure l'évolution de $r_{A1}$ dans la composition, par exemple en suivant la concentration des tensioactifs par HPLC ;
e) On observe que $r_{A1}$ atteint une valeur limite qui ne change plus et qui est indépendante de la valeur de $r_{A1}$ choisie au départ ;
f) On nomme cette valeur $r_{l(A)}$ ;
g) Les vésicules sont préparées en.utilisant une valeur de $r_A$ supérieure à $r_{l(A)}$.

Dans le cas de la seconde variante, on calcule la fraction molaire de tensioactif cationique suivant la formule :

$$r_C = \frac{n_C}{n_A + n_C}$$

La fraction $r_C$ est choisie pour chaque couple de tensioactifs, ou de mélanges de tensioactifs en suivant le protocole suivant :

a) Les tensioactifs anionique et cationique sont mélangés dans l'eau, en choisissant une fraction $r_{Cl}$ au hasard, de préférence avec un excès de tensioactif anionique ;
b) Le mélange est chauffé à une température proche mais inférieure à la température de fusion du tensioactif cationique $T_C$, pendant une durée supérieure ou égale à une heure ;
c) La suspension obtenue est dialysée ;
d) Au cours de la dialyse on mesure l'évolution de $r_{Cl}$ dans la composition, par exemple en suivant la concentration des tensioactifs par HPLC ;
e) On observe que $r_{Cl}$ atteint une valeur limite qui ne change plus et qui est indépendante de la valeur de $r_{Cl}$ choisie au départ ;

f) On nomme cette valeur $r_{I(C)}$;
g) Les vésicules sont préparées en utilisant une valeur de $r_C$ supérieure à $r_{I(C)}$.

La concentration de tensioactifs dans le mélange est notée c et calculée de la façon suivante :

$$c = \frac{mA + mC}{mA + mC + mH_2O}$$

$m_A$ désignant la masse de tensioactif anionique, $m_C$ la masse de tensioactif cationique et $m_{H2O}$ la masse d'eau.

Le choix de la concentration massique c permet de contrôler la taille finale des vésicules : plus c est faible, plus la taille des vésicules est élevée. De préférence c est comprise entre 0,01 et 3%, et encore plus préférentiellement entre 0,33 et 1%. La taille des vésicules est un paramètre important qu'il est utile de pouvoir contrôler en vue de leur application notamment dans le domaine pharmaceutique. Des vésicules de petite taille sont en effet plus facilement assimilées par l'organisme humain ou animal.

La suspension préparée à l'étape i) est mise à chauffer à une température T pendant un temps $t_{chauff}$.

T est inférieure à la température de fusion du mélange catanionique, c'est-à-dire la température de fusion du mélange des deux tensioactifs anionique et cationique. Elle est proche mais inférieure à la température de fusion du tensioactif le moins soluble parmi le tensioactif anionique et le tensioactif cationique. T est choisi de la manière suivante : elle être suffisamment élevée pour permettre la dissolution des cristaux de tensioactifs insolubles (les tensioactifs anioniques et éventuellement non-ioniques dans le cas de la première variante). Si T est trop basse, la solubilisation ne se fait pas, ou se fait trop lentement ce qui conduit à la formation de cristaux, d'un précipité ou d'un surnageant. Si T est trop élevée, la solution devient presque transparente, ce qui veut dire qu'on forme des micelles mixtes ou de très petites vésicules qui seront éliminées par la dialyse. En pratique T est comprise entre les températures de fusion de chacun des tensioactifs de la suspension, et généralement elle est supérieure ou égale à 40°C. T est donc inférieure à la température de fusion du tensioactif le moins soluble. De façon habituelle, on chauffe la suspension jusqu'à une température T qui reste inférieure ou égale à 80°C. En pratique T est inférieure de 2 à 5 °C de la température de fusion du tensioactif le moins soluble.

La durée du chauffage $t_{chauff}$ doit être suffisamment longue pour assurer la dissolution des cristaux de tensioactifs insolubles (anioniques et éventuellement non-ioniques). Si $t_{chauff}$ est trop long, on observe la formation de cristaux, d'un précipité ou d'un surnageant. Un contrôle visuel permet d'observer le temps nécessaire à la dissolution des tensioactifs. La durée nécessaire pour obtenir une dissolution complète dépend des tensioactifs choisis. Par exemple une durée de une heure à une semaine peut être choisie, et de façon courante une durée de un à deux jours se révèle satisfaisante pour une grande partie des mélanges de tensioactifs.

Avec une température T bien choisie, on obtient généralement au bout du temps $t_{chauff}$ une solution blanche sans agrégats ni cristaux visibles à l'oeil nu. Le choix de T et du temps $t_{chauff}$ peut être affiné en contrôlant par microscopie, après la dialyse, la formation des vésicules et l'absence de cristaux résiduels.

Après cette étape, la dispersion peut être éventuellement diluée en ajoutant un solvant, de préférence de l'eau, à la température T. Cette étape est optionnelle, elle permet par exemple de contrôler la viscosité finale de la solution de vésicules.

Dans le cas où l'on souhaite encapsuler un actif dans les vésicules, on peut ajouter pendant l'étape ii) une solution contenant l'actif à encapsuler. Cette solution est alors introduite à la température T.

A l'issue de cette étape la dispersion est refroidie à la température ambiante (environ 18-25°C). Les vésicules qui se sont formées au cours de l'étape ii) ont une forme sensiblement ovoïdale, allongée et plate.

La dispersion est mise à dialyser pendant un temps $t_{dial}$. Selon une première variante le bain de dialyse est de l'eau pure. La dialyse permet d'éliminer de la phase externe de la dispersion les sels $A^+B^-$, et en particulier les sels $H^+B^-$ (première variante) ou $A^+OH^-$ (seconde variante). Ces sels se sont formés dans le milieu aqueux extérieur aux vésicules et dans la cavité interne des vésicules. Le procédé de l'invention permet d'obtenir à la fin de l'étape ii) des vésicules non poreuses et faiblement perméables de forme sensiblement sphérique et l'étape de dialyse permet d'éliminer les sels de la solution aqueuse dans laquelle les vésicules sont en suspension, ou sont dispersés. Mais les sels qui se sont formés à l'intérieur de la cavité des vésicules ne sont pas éliminés par la dialyse, ce qui crée à l'issue de la dialyse une différence de pH entre la phase aqueuse dans laquelle sont dispersées les vésicules et la cavité interne des vésicules. En l'absence d'actif à encapsuler, cette différence de pH est supérieure à une unité de pH, et préférentiellement supérieure à deux unités de pH, avantageusement supérieure à trois unités.

Selon une seconde variante de l'invention, le gradient de pH entre la partie interne des vésicules et la phase externe peut être ajusté en utilisant comme bain de dialyse une solution aqueuse faiblement acide ou faiblement basique, comme par exemple une solution de HCl aqueux à 0,1mM ou de NaOH aqueux à 0,1mM. Préférentiellement la solution

utilisée comme bain de dialyse selon cette variante est une solution aqueuse d'un acide, tel que HCl, de concentration allant de 0 à 0,1mM ou une solution aqueuse d'une base, telle que NaOH, de concentration allant de 0 à 0,1mM.

La durée $t_{dial}$ est généralement choisie pour que l'élimination des ions à l'extérieur des vésicules soit complète. Habituellement 2 à 3 jours suffisent. Si $t_{dial}$ est trop courte, la dispersion est instable et peut former un précipité ou un surnageant d'agrégats, ou former des cristaux. Un choix de $t_{dial}$ trop long n'altère pas la qualité des vésicules obtenues. Toutefois, après plusieurs mois de dialyse, les vésicules finissent par se vider de leur contenu.

La solution est ensuite extraite de la cassette de dialyse et stockée. La composition finale est extrêmement stable, les vésicules restent intègres pendant plusieurs années de stockage après leur extraction de la cassette de dialyse. Elles peuvent même rester sous dialyse sans être détruites. La solution peut être diluée. Des essais de dilution par un facteur 50 ont été réalisés sans destruction notable des vésicules.

Si l'on applique ce procédé aux couples de tensioactifs catanioniques qui ont été décrits dans l'art antérieur et notamment dans WO2005/089927 et EP-1 846 152, on observe la formation de vésicules poreuses à l'issue de l'étape ii). Ces tensioactifs catanioniques étant à contre-ions ($H^+$, $OH^-$) conduisent en outre à la formation de vésicules dont la cavité interne présente un pH neutre comme la phase externe.

Le document WO2006/070095 indique que l'on peut utiliser des cations à contre-ion différent de $OH^-$. Toutefois, les vésicules obtenues par ce procédé sont différentes de celles de l'invention.

En effet, le procédé de l'invention se distingue de celui de l'art antérieur par la dialyse, la température de chauffage et la durée du chauffage. Dans les conditions de l'art antérieur, même si des vésicules se formaient, elles seraient poreuses, et en particulier, en l'absence de dialyse, la préparation est instable, i.e. des cristaux, un précipité ou un surnageant se forment.

Selon la première variante, si l'on n'a pas ajouté d'actif à encapsuler, on constate que l'intérieur des vésicules est à un pH inférieur au pH à l'extérieur des vésicules (typiquement, pH - 3, soit 1 mM en HBr ou HCl par exemple). Et selon la seconde variante, si l'on n'a pas ajouté d'actif à encapsuler, on constate que l'intérieur des vésicules est à un pH supérieur au pH à l'extérieur des vésicules.

Le pH interne peut être mesuré par spectroscopie de fluorescence résolue en temps ou statique après ajout d'une sonde fluorescente adéquate.

Un gradient de pH est maintenu sur des durées de l'ordre de plusieurs mois. Ce pH peut être ajusté dans une certaine mesure en jouant sur la taille des vésicules, comme cela a été décrit ci-dessus, des vésicules plus petites étant dotées de cavités internes de pH plus faibles. On peut aussi jouer sur le pH en utilisant un mélange acide gras/sel d'acide gras comme décrit ci-dessus pour la première variante. L'utilisation de sel d'acide gras tend à remplacer HCl ou HBr par NaCl ou NaBr dans les mêmes proportions, et à augmenter le pH interne. Dans le cas de la seconde variante, on peut utiliser un mélange d'halogénure d'ammonium et d'hydroxyde d'ammonium, ou d'halogénure d'ammonium et d'ammonium protonable.

Les vésicules catanioniques de l'invention ont une taille de 0,1-100$\mu$m, ajustable en jouant sur la concentration massique c de la composition de tensioactifs de départ.

A l'issue du procédé de l'invention, le pH à l'intérieur des vésicules est différent du pH à l'extérieur des vésicules. Cette caractéristique est obtenue directement, sans ajout de solution tampon par exemple. Habituellement, la formation de vésicules avec un gradient de pH nécessite l'ajout d'une solution tampon qui diffuse dans la vésicule (liposome), et l'excès est ensuite nettoyé (C. Grabielle-Madelmont, et al., Journal Of Biochemical And Biophysical Methods, 56(1-3): 189-217, June 2003, ou K. Holmberg, D. Shah, and M. Schwuger, editors. Handbook of Applied Surface and Colloid Chemistry, volume 2, Wiley-VCH, New York, 2002). Dans le procédé de l'invention, la solution est acidifiée ou rendue basique naturellement lorsque les vésicules se forment. Les temps de rétention de la solution acide ou basique dans la cavité interne des vésicules sont comparables, voire supérieurs, aux préparations de l'art antérieur.

Selon une variante, les vésicules de l'invention peuvent être stabilisées par au moins un polymère adsorbé sur leur surface. Parmi les polymères utilisables, on peut citer ceux choisis parmi :

- les polysaccharides tels que par exemple les dextranes et les dérivés de cellulose tels que les hydroxyméthylcelluloses, les hydroxyéthylcelluloses et les hydroxypropylcelluloses,
- les polymères de synthèse tels que les polyéthylèneglycols (PEG), la polyvinylpyrrolidone (PVP), les polystyrènes, les polyacrylates, les polyvinylalcools tels que les produits vendus sous les dénominations commerciales PVA, Ethenol®, Poval®, Acroflex®, Airvol®, Alcotex® ou Aquafilm®.

Parmi ces polymères, on préfère tout particulièrement utiliser des polymères faiblement adsorbants tels que le polyoxyéthylène, le dextrane, la polyvinylpyrrolidone (PVP), les polymères di-blocs oxyéthylénés tels que les polymères vendus sous la dénomination commerciale Varonic® par la société Degussa-Goldschmidt, les copolymères blocs à base d'oxyde d'éthylène et d'oxyde de propylène tels que les polymères vendus par les société BASF sous les dénominations commerciales Pluronic® et Lutrol® et leurs équivalents hydrosolubles, les copolymères tri-blocs hydrosolubles c'est-à-dire les copolymères composés de blocs hydrophile-hydrophobe-hydrophile tels que les produits vendus sous

les dénominations Méthyl-Oxyrane, copolymère EOPO, Pluronic®, Antarox®, Arcol®, Daltocel®, Dowfax® et leurs analogues comportant du polystyrène comme groupement hydrophobe

Lorsqu'ils sont utilisés, ces polymères représentent de préférence de 50 à 400 % et encore plus particulièrement de 100 à 200 % en poids par rapport au poids total de la bicouche.

L'enrobage des vésicules de l'invention n'est pas nécessaire mais peut être utile lorsque l'on souhaite les introduire dans un milieu fortement chargé en sels, afin d'assurer leur stabilité.

Il est possible d'encapsuler des principes actifs hydrosolubles dans les vésicules avec d'excellents rendements : jusqu'à 66% pour les principes actifs de charge opposée à celle de la cavité interne des vésicules, 30% pour les principes actifs de charge identique à celle de la cavité interne des vésicules, 10% pour les principes actifs neutres. Dans les liposomes de l'art antérieur, des rendements bien inférieurs sont habituellement donnés. En particulier, dans les autres systèmes catanioniques, sans gradient de pH entre la phase interne et la phase externe, la littérature rapporte des rendements jusqu'à 70% pour les solutés de charge opposée aux vésicules, et inférieurs à 8% pour des solutés de même charge que les vésicules.

Les temps de rétention des vésicules de l'invention sont comparables ou supérieurs aux temps habituellement rapportés pour les vésicules de l'art antérieur.

Les vésicules sans soluté encapsulé mais qui présentent un intérieur acide ou basique à l'issue du procédé de l'invention ont la faculté d'absorber spontanément certains composés cationiques ou anioniques, respectivement, qui se trouvent alors encapsulés à l'intérieur des vésicules. De plus, les parois des vésicules sont chargées positivement dans le cas de la première variante, donc elles ont la faculté d'attirer des composés de charge opposée qui se trouvent alors concentrés à proximité des parois des vésicules. Selon une variante, le procédé de l'invention comporte une étape au cours de laquelle on ajoute un actif à encapsuler à la composition issue de l'étape iii).

Ces propriétés permettent d'utiliser les vésicules de l'invention pour encapsuler des principes actifs du type molécule organique hydrosoluble à faible pH (première variante) ou à pH élevé (seconde variante), notamment dans le domaine médical ou pharmaceutique et dans le domaine cosmétique. Ces vésicules sont stables sur des périodes de plusieurs mois et permettent notamment de retenir, par adsorption et/ou encapsulation, et de contrôler la diffusion lente de molécules actives pharmaceutiques, cosmétiques ou bien encore de cellules telles que des bactéries par exemple.

Ces propriétés permettent également d'envisager l'utilisation des vésicules de l'invention pour capturer des ions dans un milieu aqueux, et cette utilisation trouve des applications notamment dans le secteur de la dépollution des milieux aqueux. Le procédé de l'invention permet de réaliser des vésicules attirant à la fois les espèces chargées positivement et négativement, ce qui est particulièrement intéressant pour des utilisations en dépollution de l'eau.

Ces propriétés permettent également d'envisager l'utilisation des vésicules de l'invention pour capturer des ions métalliques dans le compartiment interne de la vésicule, qui peuvent réagir avec les ions $B^-$ pour former des particules de petite taille, par exemple nanométrique. Par exemple, avec $B^- = Cl^-$ ou $Br^-$ on peut faire réagir des ions $Ag^+$, ou avec $B^- = OH^-$ (seconde variante) on peut faire réagir des métaux de transition ($Cu^{2+}$, $Mn^{2+}$, $Zn^{2+}$ etc.). Toute réaction d'hydrolyse-condensation catalysée en milieu aqueux acide ou basique, par exemple l'hydrolyse-condensation du tetraéthoxysilane en $SiO_2$ peut être envisagée.

Enfin, l'invention a également pour objet l'utilisation d'au moins une vésicule telle que décrite ci-dessus, pour la formulation d'espèces actives dans une composition cosmétique ou dans une composition pharmaceutique.

Une composition cosmétique comprenant au moins une vésicule telle que décrite ci-dessus constitue un autre objet de l'invention.

Une composition pharmaceutique comprenant au moins une vésicule telle que décrite ci-dessus constitue un autre objet de l'invention.

De façon plus détaillée, et afin d'illustrer l'invention, des exemples sont donnés ci-dessous de tensioactifs ayant effectivement conduit à la formation de vésicules selon l'invention à l'aide du procédé décrit ci-dessus.

Mise en oeuvre de la première variante :

- Les solvants testés ont été : $H_2O$, $D_2O$, un mélange eau-glycérol (70:30)
- Tensioactifs anioniques :

Ils peuvent être choisis parmi les acides gras et les sels des acides gras suivants :

| Acide laurique | Acide myristique | Acide myristique deutéré | Acide palmitique |
|---|---|---|---|
| 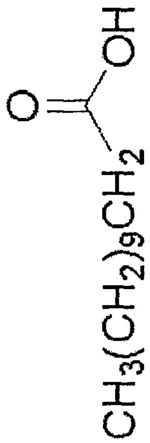 | 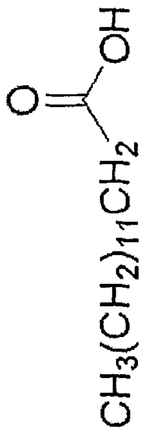 | 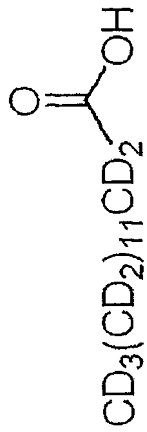 | 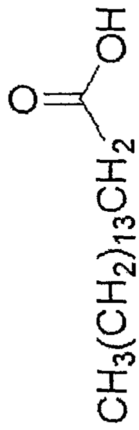 |

| Myristate de sodium |
|---|
| 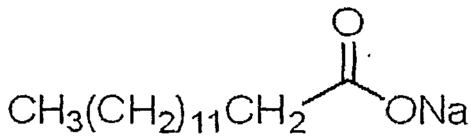 |

Acides gras complexes :

| Acide dodécanedioïque | Acide hexadecanedioïque | Acide 16-hydroxydécanoïque |
|---|---|---|
| 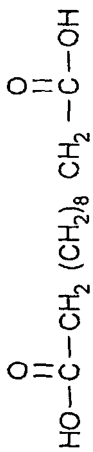 | 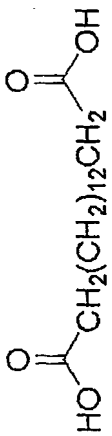 | 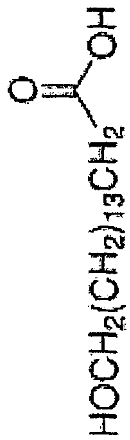 |

Tensioactifs cationiques :

| Bromure de cétyl triméthylammonium | Chlorure de cétyl triméthylammonium | Bromure de myristyl trimethylammonium |
|---|---|---|
| 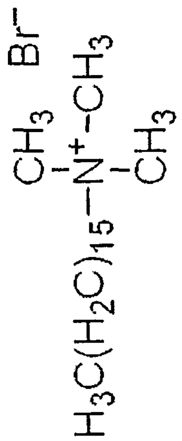 | 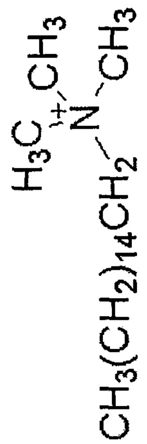 | 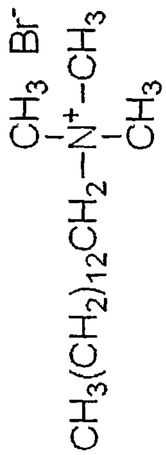 |

Autres tensioactifs :

| Tétradécanol (en mélange avec l'acide myristique) |
|---|
| $CH_3(CH_2)_{12}CH_2OH$ |

Solutés cationiques :

| Chlorure de Rhodamine 6G | Lucigénine |
|---|---|
| 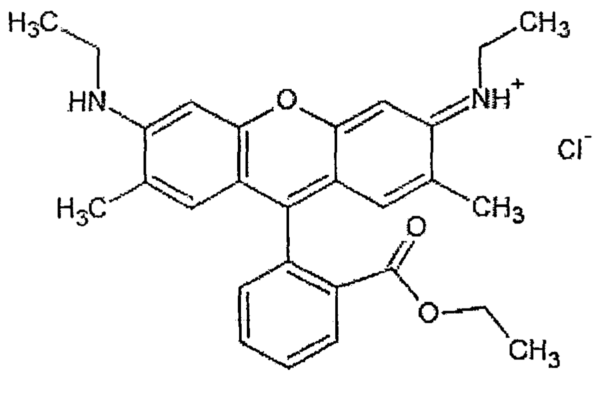 | 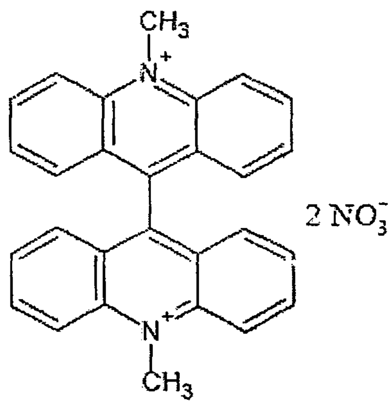 |

Solutés neutres ou amphotères :

| Glucose | Chlorure de Rhodamine B |
| --- | --- |
| 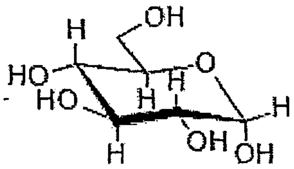 | 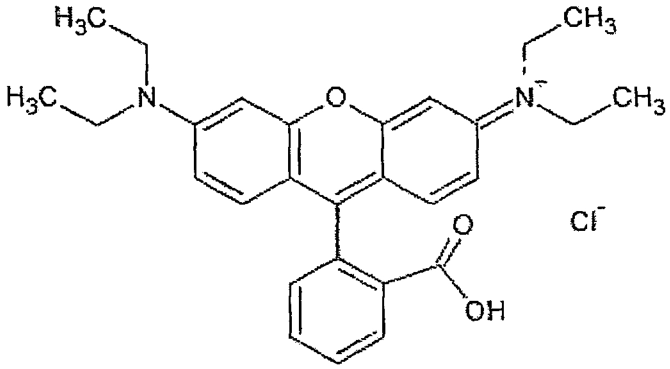 |

Solutés anioniques :

| Sulforhodamine | Oregon Green |
| --- | --- |
| 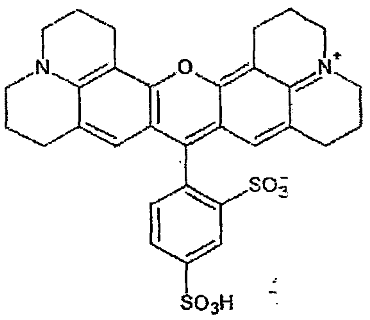 | 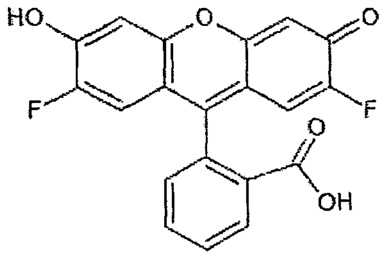 |

Etape i) on prépare une suspension d'eau, de tensioactif cationique et de tensioactif anionique, en de manière optionnelle du soluté à encapsuler en prenant les valeurs adéquates de r et c, avec

$$r = \frac{n(anionique)}{n(anionique) + n(cationique)}$$ (fraction molaire de tensioactif anionique)

$$c = \frac{m(anionique) + m(cationique)}{m(anionique) + m(cationique) + m(eau)}$$ (concentration massique de tensioactif)

Le choix de *r* est fait en sorte qu'à l'issue de la dialyse, on obtient effectivement des vésicules. La méthode pour déterminer rationnellement les valeurs de *r* possibles a été décrite ci-dessus. *r* peut être déterminé par différents tests, mais nous avons choisi la méthode suivante : On effectue une préparation comme expliqué ci-dessus, en choisissant un *r* au hasard (de préférence tel qu'il y ait un excès significatif de tensioactif soluble dans l'eau, ici cationique). On mesure l'évolution de r au cours de la dialyse, par exemple en mesurant séparément les concentrations des deux tensioactifs par HPLC. On constate que *r* finit par atteindre une valeur limite qui ne change plus, et qui est indépendante du *r* choisi initialement. Les vésicules sont alors préparées à ce rapport molaire, ou à des compositions plus riches en tensioactif insoluble (ici anionique ou non ionique).

Par exemple, dans le cas du mélange acide myristique/cétyltriméthylammonium chloré ou bromé (CTACl ou CTABr), la composition des échantillons préparés à des valeurs de *r* quelconques se stabilisent à *r* ~ 0,60 en plusieurs centaines d'heures de dialyse. On choisit alors de préparer les vésicules à un rapport molaire plus riche en acide myristique, soit *r* = 0,66. On note que des préparations effectuées à des *r* supérieurs restent intactes et forment également

des vésicules. On obtient le même type de comportement avec d'autres mélanges de tensioactifs.

Le choix de c permet de contrôler dans une certaine mesure la taille finale des vésicules : plus *c* est faible, plus la taille des vésicules est élevée. Il n'y a pas de limites particulières relatives à la quantité de soluté à ajouter, si ce n'est qu'on a constaté que de très fortes concentrations de certains solutés peuvent empêcher les vésicules de se former.

On choisit généralement *c* = 1 %.

Si on choisit d'encapsuler un soluté, il est ajouté à cette étape de sorte que la concentration finale soit préférentiellement dans la gamme 30 $\mu$M - 50 mM. On peut envisager des concentrations plus faibles, et plus élevées. Toutefois, dans certains cas de concentration trop élevée, on constate que l'ajout de soluté empêche la formation de vésicules.

On obtient alors une suspension aqueuse qui présente habituellement des cristaux de tensioactif insoluble (par exemple l'acide myristique), et éventuellement le soluté à encapsuler.

Etape ii) cette suspension est mise à chauffer à la température T pendant un temps $t_{chauff}$.

T est choisie de la manière suivante : elle doit être suffisamment élevée pour permettre la dissolution des cristaux de tensioactifs insolubles. Si T est trop basse, la solubilisation ne se fait pas, ou se fait trop lentement ce qui conduit à la formation de cristaux, d'un précipité ou d'un surnageant. Si T est trop élevée, la solution devient presque transparente, ce qui veut dire qu'on forme des micelles mixtes ou de très petites vésicules qui seront éliminées par la dialyse.

$t_{chauff}$ doit être suffisamment long pour assurer la dissolution des cristaux de tensioactif insoluble.

Si T est bien choisie, on obtient généralement au bout du temps $t_{chauff}$ une solution blanche sans agrégats ni cristaux visibles à l'oeil nu. Le choix de T et $t_{chauff}$ peut être affiné en contrôlant par microscopie que les vésicules sont bien formées après la dialyse et qu'il n'y a pas de cristaux résiduels.

Par exemple, dans le cas du mélange acide myristique/CTABr ou CTACl, on peut chauffer à 50°C pendant 2 jours quel que soit le choix de r.

La suspension est éventuellement diluée en ajoutant de préférence de l'eau à la température T, ou une solution contenant le soluté à encapsuler. Cette étape est optionnelle, elle permet par exemple de contrôler la viscosité finale de la solution de vésicules. Par exemple, avec le mélange acide myristique/CTACl ou acide myristique/CTABr, avec *r* = 0,66 et c = 1 %, on obtient après la dialyse une solution très visqueuse (gel) de vésicules de diamètre autour de 5 $\mu$m. Si on dilue par 3 la solution avant de la dialyser, on obtient une solution fluide qui contient des vésicules de diamètre autour de 5 $\mu$m.

Après refroidissement, la suspension est mise à dialyser pendant un temps $t_{dial}$.

On utilise par exemple des cassettes de dialyse avec un seuil de coupure moléculaire de 10 kDa, mais des seuils plus bas conviennent également. Le bain de dialyse peut être changé par de l'eau fraîche à intervalles réguliers, notamment pour éliminer le soluté qui n'est pas encapsulé dans les vésicules, mais c'est optionnel. Il est préférable d'agiter le bain de dialyse pour permettre une élimination rapide du sel entre les vésicules, et éviter ainsi leur déstabilisation. $t_{dial}$ est généralement choisi pour que l'élimination des ions entre les vésicules (pas à l'intérieur) soit complète. Habituellement 2 à 3 jours suffisent.

Au cours de la dialyse, il est fréquent d'observer dans un premier temps une séparation de phase (typiquement au bout de 12 heures). Il suffit alors d'agiter un peu la cassette pour que la solution s'homogénéise, et on obtient finalement une suspension qui ne se sépare plus jamais en deux phases.

La solution est extraite de la cassette de dialyse et stockée. La solution finale est extrêmement stable, les vésicules restent intègres après plusieurs années de stockage après extraction de la cassette, elles peuvent même rester sous dialyse sans être détruites. La solution peut être diluée par un facteur 50 sans destruction notable des vésicules.

Si on n'a pas ajouté de soluté à encapsuler, on constate que l'intérieur des vésicules est à un pH inférieur à l'extérieur des vésicules (typiquement, pH - 3, soit 1 mM en HBr ou HCl).

Un gradient de pH est maintenu sur des durées de l'ordre de plusieurs mois (temps de demi-vie de HCl = 100 jours). Ce pH peut être modulé en jouant sur la taille des vésicules, comme décrit ci-dessus, des vésicules plus petites produisant des pH plus faibles. On peut aussi jouer sur le pH en utilisant un mélange acide gras/sel d'acide gras comme décrit ci-dessus. L'utilisation de sel d'acide gras tend à remplacer HCl ou HBr par NaCl ou NaBr dans les mêmes proportions. Le pH interne peut être mesuré par spectroscopie de fluorescence résolue en temps ou statique après ajout d'une sonde fluorescente adéquate.

De manière optionnelle, du soluté à encapsuler peut être ajouté. Si les vésicules ont été préparées sans ajout de soluté dans les étapes précédentes, alors elles ont la faculté de pouvoir absorber certains composés présents en solution, par exemple la Rhodamine B ou la Rhodamine 6G. Il suffit d'ajouter le soluté et d'attendre une dizaine de minutes avant que les vésicules n'absorbent spontanément le soluté.

Si on a ajouté un soluté pendant la préparation des vésicules, on constate qu'une fraction importante reste à l'intérieur des vésicules : jusqu'à 66% s'il est anionique, de l'ordre de 30% s'il est cationique ou neutre. Les vésicules -se vident très lentement du soluté, avec des temps de demi-vie de l'ordre d'une centaine de jours, avec des variations

selon la nature du soluté. On peut vérifier la présence du soluté par les techniques spectroscopiques usuelles. On peut éventuellement faire appel à des techniques plus élaborées qui montrent que le soluté présent dans la solution finale est effectivement à l'intérieur des vésicules, pas à l'extérieur (microscopie confocale, spectroscopie de fluorescence résolue en temps). Les solutés cationiques sont uniformément répartis à l'intérieur des vésicules, les solutés anioniques sont concentrés près des parois des vésicules, uniquement du côté interne de la paroi.

Mise en oeuvre de la seconde variante :

On a testé les tensioactifs suivants :

- Tensioactifs anioniques :

  Myristate de sodium, tétradécane sulfonate de sodium, hexadécane sulfonate de sodium.

- Tensioactifs cationiques : ils sont choisis parmi les amines et les sels des amines suivantes :

  Tridécylamine, tétradécylamine, hexadecylamine, N,N diméthyltridécylanime, N,N diméthyltétradécylamine.

**PARTIE EXPERIMENTALE**

FIGURES

Figure 1 : vésicules acide myristique/CTACl r = 0.65 c = 1.0% dialysées 5 jours, observation au microscope confocal après marquage à l'Oregon Green 488. La barre est de 10 μm.

Figure 2: vésicules acide myristique/CTACl r = 0.65 c = 1.01% diluées par trois puis dialysées 5 jours, observation au microscope confocal après marquage à l'Oregon Green 488. La barre est de 10 μm.

Figure 3 : vésicules myristate de sodium/N,N dimethyltetradécylamine r = 0.35 c = 1.0% dialysées 95h, observation au microscope confocal après marquage à la Rhodamine 6G.

Figure 4 : vésicules acide tetradecane dicarboxylique/chlorure de cétyl triméthylammonium r = 0.49 c = 1.0% dialysées 4 jours, observation au microscope confocal après marquage à l'Oregon Green.

Figure 5 : vésicules acide 16-hydroxy hexadécanoïque/chlorure de cétyl triméthylammonium r = 0.50 c = 1.0% dialysées 4 jours; observation au microscope confocal après marquage à l'Oregon Green.

Figure 6 : vésicules acide myristique/CTACl r = 0.66 c = 1.00% diluées par trois avec Rhodamine 6G encapsulée dialysées 5 jours. La barre est de 10 μm.

Figure 7: vésicules acide myristique/CTACl r = 0.65 c = 1.01% diluées par trois avec Rhodamine encapsulée dialysées 5 jours, observation au microscope confocal après marquage à l'Oregon Green 488.

Figure 8 : courbe de calibration de la réponse de la Rhodamine B : F(576nm)/F(600nm) en fonction du pH, imposé par ajout de HCl à une solution de Rhodamine B.

Figure 9 : pH dans des vésicules acide myrsitique/chlorure de cétyltriméthyl ammonium mesuré par le ratio de fluorescence de la Rhodamine B à 546nm et 600nm, pour différentes dilutions de la solution de vésicules.

Figure 10 : Evolution de la concentration de Rhodamine 6G dans les vésicules acide myristique/chlorure de cétyltriméthylammonium en fonction du temps, évaluée par l'absorbance à 526 nm.

Figure 11 : Evolution de la concentration de l'Oregon Green dans les vésicules acide myristique/chlorure de cétyltriméthylammonium en fonction du temps, évaluée par fluorescence à 522 nm sous excitation à 502 nm.

Figure 12 : Evolution de la fraction molaire d'acide myristique $r = \frac{c(myristique)}{c(myristique) + c(CTA)}$ pour des mélanges de fraction molaire initiale $r_0$ = 0.32, 0,47, 0,55, 0,66 et 0,70 au cours du temps de dialyse.

Figure 13: vésicules myristate de sodium/N,N dimethyltetradécylamine r = 0.35 c = 1.0% dialysées 95h, observation au microscope confocal une minute après ajout d'Oregon Green.

Figure 14: vésicules acide myristique / chlorure de cétyl triméthylammonium, r = 0.66 c = 1.0% diluées à 0.33% et dialysées 4 jours. Observation au microscope confocal 20 minutes après addition de Rhodamine 6G.

Exemple 1 : préparation de vésicules à faible pH interne, gel

On mélange 33,7 mg d'acide myristique, 25,1 mg de chlorure de cetyltriméthylammonium et 5,7603 g d'eau ultrapure (r = 0,65, c = 1,01%). On laisse agiter à 50°C pendant 72 heures. Les cristaux d'acide myristique se dissolvent progressivement pour donner une solution blanche homogène sans résidus solide.

Environ 3 mL de cette solution sont prélevés et mis dans une cassette de dialyse de 3 mL à membrane de cellulose (Slide-a-lyzer, ThermoScientific) de seuil de coupure 3500 Da. La cassette est plongée dans un bain de=dialyse d'environ 300 mL sous agitation à température ambiante. L'eau de dialyse est changée pour de l'eau ultrapure au bout de 1h, 4h, 24h, 48h et 5 jours. La cassette est vigoureusement agitée avant chaque changement d'eau de dialyse. Avant le changement d'eau à 1h et 4h de dialyse, on observe une démixtion, avec une solution très visqueuse blanche qui surnage au-dessus d'une solution limpide. Après le changement d'eau à 24h de dialyse, il n'y a plus de démixtion observable, mais la solution forme un gel très visqueux.

Après 5 jours de dialyse, la membrane de la cassette de dialyse est découpée, et le gel blanc est collecté à l'aide d'une spatule et stocké à température ambiante.

La présence de vésicules dans le gel est contrôlée par microscopie confocale après marquage à l'Oregon Green 488 : environ 100 mg du gel sont prélevés, on ajoute 20 μL d'une solution aqueuse saturée d'Oregon Green 488 diluée 10 fois. L'observation par microscopie confocale est effectuée selon les techniques usuelles. On obtient une image des vésicules dont les murs positifs sont marqués par le colorant négatif (figure 1). Ces vésicules forment un empilement presque compact.

Exemple 2 : préparation de vésicules à faible pH interne, solution fluide

On mélange 33,7 mg d'acide myristique, 25,1 mg de chlorure de cetyltriméthylammonium et 5,7603 g d'eau ultrapure (r = 0,65, $c_{initial}$ = 1,01%). On laisse agiter à 50°C pendant 72 heures. Les cristaux d'acide myristique se dissolvent progressivement pour donner une solution blanche homogène sans résidus solide.

1,0122g de cette solution sont prélevés. On y ajoute 2,0513 g d'eau à 50°C et on laisse agiter 30 secondes ($c_{final}$ = 0,33%). Le mélange est mis dans une cassette de dialyse de 3 mL à membrane de cellulose (Slide-a-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 1h, 4h, 24h, 48h et 5 jours. La cassette est vigoureusement agitée avant chaque changement d'eau de dialyse. Au cours de la dialyse, la solution reste blanche, homogène et fluide.

Après 5 jours de dialyse, la solution est prélevée de la cassette à l'aide d'une seringue et stockée à température ambiante.

La présence de vésicules dans la solution est contrôlée par microscopie confocale après marquage à l'Oregon Green 488 : environ 100 mg de la solution sont prélevés, on ajoute 20 μL d'une solution aqueuse saturée d'Oregon Green 488 diluée 10 fois. L'observation par microscopie confocale est effectuée selon les techniques usuelles. On obtient une image des vésicules dont les murs positifs sont marqués par le colorant négatif (figure 2). Les vésicules sont bien séparées. L'excès de colorant négatif reste dans la solution mais ne pénètre pas dans les vésicules.

Exemple 3 : préparation de vésicules à fort pH interne, solution fluide

On mélange 29,2 mg de myristate de sodium, 53,4 mg de N,N diméthyltetradécylamine et 8,1749 g d'eau ultrapure (r = 0,35, c = 1,00%). On laisse agiter à 50°C pendant 41 heures. Les cristaux de myristate de sodium se dissolvent progressivement et les gouttelettes huileuses du N,N diméthyltetradécylamine disparaissent progressivement pour donner une solution blanche homogène.

Environ 3 mL de cette solution sont prélevés et mis dans une cassette de dialyse de 3 mL à membrane de cellulose (Slide-a-lyzer, ThermoScientific) de seuil de coupure 3500 Da. La cassette est plongée dans un bain de dialyse d'environ 500 mL sous agitation à température ambiante. L'eau de dialyse est changée pour de l'eau ultrapure au bout de 30 minutes, 1h, 3h, 7h, 22h, 95h. La cassette est vigoureusement agitée avant chaque changement d'eau de dialyse. Avant le changement d'eau à 30 minutes, 1h, 3h, 7h et 22h de dialyse, on observe une démixtion entre une solution blanche qui surnage au-dessus d'une solution limpide. Après le changement d'eau à 22h de dialyse, il n'y a plus de démixtion observable.

Après 95h de dialyse, la solution blanche fluide est prélevée de la cassette de dialyse à l'aide d'une seringue et stockée à température ambiante.

La présence de vésicules dans la solution est contrôlée par microscopie confocale après ajout de Rhodamine 6G : environ 100 μL de solution sont prélevées, on ajoute 10 μL d'une solution aqueuse de Rhodamine 6G à 10 μM. L'observation par microscopie confocale est effectuée selon les techniques usuelles. On obtient une image des vésicules imperméables qui apparaissent en noir sur le fond continu de Rhodamine 6G dans la solution extérieure (figure 3).

Exemple 4 : préparation de vésicules avec un diacide gras

On mélange 20 mg d'acide tetradecane dicarboxylique, 25,8 mg de chlorure de cetyltriméthylammonium et 4,5728 g d'eau ultrapure (r = 0,49, c = 1,00%). On laisse agiter à 50°C pendant 75 heures. Les cristaux de l'acide dicarboxylique se dissolvent progressivement pour donner une solution blanche homogène sans résidus solide.

Environ 3 mL de cette solution sont prélevés et mis dans une cassette de dialyse de 3 mL à membrane de cellulose (Slide-a-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 18h, 27h, 42h, 66h et 4 jours. La cassette est vigoureusement agitée avant chaque changement d'eau de dialyse. Après le changement d'eau à 27h de dialyse, la solution forme un gel très visqueux.

Après 4 jours de dialyse, la membrane de la cassette de dialyse est découpée, et le gel blanc est collecté à l'aide d'une spatule et stocké à température ambiante.

La présence de vésicules dans le gel est contrôlée par microscopie confocale après marquage à l'Oregon Green 488 : environ 100 mg du gel sont prélevés, on ajoute 20 $\mu$L d'une solution aqueuse saturée d'Oregon Green 488 diluée 10 fois. L'observation par microscopie confocale est effectuée selon les techniques usuelles. On obtient une image des vésicules dont les murs positifs sont marqués par le colorant négatif (figure 4). Ces vésicules forment un empilement presque compact.

Exemple 5 : préparation de vésicules avec un acide gras hydroxylé

On mélange 22,0 mg d'acide 16-hydroxy hexadécanoïque, 26,3 mg de chlorure de cetyltriméthylammonium et 4,8263 g d'eau ultrapure (r = 0,50, c = 1,00%). On laisse agiter à 50°C pendant 75 heures. Les cristaux de l'acide dicarboxylique se dissolvent progressivement pour donner une solution blanche homogène sans résidus solide.

Environ 3 mL de cette solution sont prélevés et mis dans une cassette de dialyse de 3 mL à membrane de cellulose (Slide-a-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 18h, 27h, 42h, 66h et 4 jours. La cassette est vigoureusement agitée avant chaque changement d'eau de dialyse. Après le changement d'eau à 27h de dialyse, la solution forme un gel très visqueux.

Après 4 jours de dialyse, la membrane de la cassette de dialyse est découpée, et le gel blanc est collecté à l'aide d'une spatule et stocké à température ambiante.

La présence de vésicules dans le gel est contrôlée par microscopie confocale après marquage à l'Oregon Green 488 : environ 100 mg du gel sont prélevés, on ajoute 20 $\mu$L d'une solution aqueuse saturée d'Oregon Green 488 diluée 10 fois. L'observation par microscopie confocale est effectuée selon les techniques usuelles. On obtient une image des vésicules dont les murs positifs sont marqués par le colorant négatif (figure 5). Ces vésicules forment un empilement presque compact.

Exemple 6 : Encapsulation de solutés organiques dans des vésicules

On mélange 33,8 mg d'acide myristique, 25,1 mg de chlorure de cetyltriméthylammonium et 5,76 de solution de Rhodamine 6G à 4.5 mM dans l'eau (r = 0,66, $C_{initial}$ = 1,01%). On laisse agiter à 50°C pendant 72 heures. Les cristaux d'acide myristique se dissolvent progressivement pour donner une solution homogène sans résidus solide qui présente la couleur rose caractéristique de la Rhodamine 6G.

1,67 g de cette solution sont prélevés, sont complétés à 5,00g par ajout d'eau ultrapure et agités pendant 30 secondes ($c_{final}$ = 0,33%, $[Rhodamine\ 6G]_{final}$ = 1.5 mM). Environ 3 mL de ce mélange sont mis dans une cassette de dialyse de 3 mL à membrane de cellulose (Slide-a-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 2 heures, 5 heures, 1 jour, 2 jours, 4 jours et 7 jours. La cassette est vigoureusement agitée avant chaque changement d'eau de dialyse. Au cours de la dialyse, la solution reste homogène et fluide et présente la coloration rose caractéristique de la Rhodamine 6G. Avant le changement d'eau de dialyse, le bain présente également la coloration rose caractéristique de la Rhodamine 6G, mais elle s'atténue progressivement au fur et à mesure des changements, jusqu'à devenir imperceptible au changement à 2 jours de dialyse.

Après 7 jours de dialyse, la solution est prélevée de la cassette à l'aide d'une seringue et stockée à température ambiante.

La présence de vésicules dans la solution et l'encapsulation de la Rhodamine 6G est contrôlée par microscopie confocale selon les techniques usuelles. La Rhodamine 6G est bien présente à l'intérieur des vésicules, et exclusivement à l'intérieur (figure 7). On peut procéder à la même observation après marquage à l'Oregon Green 488 : à 20$\mu$L de la solution, on ajoute 10 $\mu$L d'une solution aqueuse saturée d'Oregon Green 488 diluée 10 fois. L'utilisation de filtres sélectifs à l'Oregon Green et la Rhodamine 6G permet de localiser sélectivement chaque colorant : l'Oregon Green

(figure 7) s'accumule près des parois chargées positivement des vésicules, la Rhodamine 6G (figures 6 et 7) est bien présente à l'intérieur des vésicules, et exclusivement à l'intérieur.

Exemple 7 : Mesure du pH interne pour des vésicules à faible pH

On mélange 33,8 mg d'acide myristique, 25,1 mg de chlorure de cetyltriméthylammonium et 5,76 g de solution de Rhodamine B à 10 $\mu$M dans l'eau (r = 0,66, $c_{initial}$ = 1,00%). On laisse agiter à 50°C pendant 72 heures. Les cristaux d'acide myristique se dissolvent progressivement pour donner une solution blanche homogène sans résidus solide.

1,67 g de cette solution sont prélevés, complétés à 5,00 g par ajout d'eau ultrapure, agités pendant 30 secondes ($c_{final}$ = 0,33%, $[\text{Rhodamine B}]_{final}$ = 3.33 $\mu$M). Le mélange est mis dans une cassette de dialyse de 3 mL à membrane de cellulose (Slide-a-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 2 heures, 5 heures, 1 jours, 2 jours, 4 jours et 7 jours.-La cassette est vigoureusement agitée avant chaque changement d'eau de dialyse. Au cours de la dialyse, la solution reste homogène et fluide et présente la coloration rose caractéristique de la Rhodamine B. Avant le changement d'eau de dialyse, le bain présente également la coloration rose caractéristique de la Rhodamine B, mais elle s'atténue progressivement au fur et à mesure des changements, jusqu'à devenir imperceptible au changement à 1 jour de dialyse.

Après 7 jours de dialyse, la solution est prélevée de la cassette à l'aide d'une seringue et stockée à température ambiante. L'observation de la solution par microscopie confocale selon les techniques usuelles sans ajout supplémentaire d'autres colorants montre que les vésicules sont bien formées et que la Rhodamine B est exclusivement encapsulée à l'intérieur des vésicules, pas à l'extérieur.

A l'aide d'un spectromètre de fluorescence (Varian Cary Eclipse), la solution est excitée à 555 nm et on mesure que le rapport des intensités de fluorescence à 576 nm et 600 nm vaut F(565nm)/F(600nm) = 1.65. Cette valeur est comparée à la courbe d'étalonnage réalisée en mesurant le rapport des intensités de fluorescence mesurées dans les mêmes conditions dans des mélanges Rhodamine B/HCl de pH connu (figures 8 et 9). On détermine que le pH interne des vésicules vaut environ pH = 2,5, alors que le pH de la solution mesuré à l'aide d'une électrode à pH plongée directement dans la solution de vésicules donne un pH égal à 6. La dilution de la solution jusqu'à un facteur 80 ne détruit pas les vésicules, et permet de garder un pH interne aux vésicules inférieur à 3,5. la surconcentration de protons à l'intérieur des vésicules est conservé sur des périodes de plusieurs mois même lorsque les vésicules sont laissées sous dialyse (tableau 1).

Tableau 1 : pH intravésiculaire et concentration associée en fonction du temps de dialyse, mesuré par le ratio de fluorescence de la Rhodamine B à 546nm et 600nm.

| Durée de dialyse | pH intravésiculaire | $c(H^+)$ correspondant |
|---|---|---|
| 7 jours | 3,15 | 0,71mM |
| 18 jours | 3,31 | 0,48mM |
| 2 mois | 3,48 | 0,34mM |

Exemple 8 : mesure de la perméabilité aux cations et du taux d'encapsulation.

On mélange 33,8 mg d'acide myristique, 25,1 mg de chlorure de cetyltriméthylammonium et 5,76 de solution de Rhodamine 6G à 4.5 mM dans l'eau (r = 0,66, $c_{initial}$ = 0,01%). On laisse agiter à 50°C pendant 72 heures. Les cristaux d'acide myristique se-dissolvent progressivement pour donner une solution homogène sans résidus solide qui présente la couleur rose caractéristique de la Rhodamine 6G.

1,67 g de cette solution sont prélevés, sont complétés à 5,00g par ajout d'eau ultrapure et agités pendant 30 secondes ($c_{final}$ = 0,33%, $[\text{Rhodamine 6G}]_{final}$ = 1.5 mM). Environ 3 mL de ce mélange sont mis dans une cassette de dialyse dé 3 mL à membrane de cellulose (Slide-a-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 2 heures, 5 heures, 1 jour, 2 jours, 4 jours et 7 jours. La cassette est vigoureusement agitée avant chaque changement d'eau de dialyse. Au cours de la dialyse, la solution reste homogène et fluide et présente la coloration rose caractéristique de la Rhodamine 6G. Avant le changement d'eau de dialyse, le bain présente également la coloration rose caractéristique de la Rhodamine 6G, mais elle s'atténue progressivement au fur et à mesure des changements, jusqu'à devenir imperceptible au changement à 2 jours de dialyse.

Sans interrompre la dialyse, environ 200 $\mu$L de solution sont prélevés après 7 jours, 14 jours, 21 jours, 28 jours, 45 jours et 57 jours de dialyse. Après le dernier prélèvement, la quantité résiduelle de Rhodamine 6G dans chaque

échantillon est mesuré comme suit : les vésicules sont détruites par 40 μL d'une solution de Triton X-100 à 5% en masse dans l'eau est ajoutée aux 200 μL d'échantillon et chauffage à 50°C pendant quelques minutes. La destruction complète des vésicules est vérifiée par microscopie confocale. La solution est complétée à 3.5 mL par addition d'eau ultrapure, et l'absorbance à 526 nm de la solution est mesurée à l'aide d'un spectromètre UV-visible (Varian Cary 1). La concentration de Rhodamine 6G dans chaque échantillon est proportionnelle à l'absorbance. On reporte donc la concentration en Rhodamine 6G dans les vésicules en fonction du temps de dialyse et l'ajustement de la courbe par une loi exponentielle donne la perméabilité selon l'équation: $c_{soluté}(t) = c_{0,soluté}e^{-\frac{3P_{soluté}}{R}t}$ (figure 10). Le rayon R des vésicules est estimé par microscopie confocale à 2,5 μm, ce qui permet finalement de déduire que la perméabilité des vésicules à la Rhodamine 6G est de 8.1 $10^{-12}$ cm/s. Le rapport de la concentration initiale de Rhodamine 6G dans la solution (1.5 mM) et la concentration dans les vésicules extrapolée à t = 0 (0.50 mM) permet de mesurer le taux d'encapsulation. 30% de la Rhodamine 6G initiale est donc encapsulée.

Exemple 9 : mesure de la perméabilité aux anions et du taux d'encapsulation.

On mélange 33,8 mg d'acide myristique, 25,1 mg de chlorure de cetyltriméthylammonium et 5,76 de solution saturée d'Oregon Green dans l'eau (r = 0,66, $c_{initial}$ = 1,01%). On laisse agiter à 50°C pendant 72 heures. Les cristaux d'acide myristique se dissolvent progressivement pour donner une solution homogène sans résidus solide qui présente la vert-jaune caractéristique de l'Oregon Green.

1,67 g de cette solution sont prélevés, sont complétés à 5,00g par ajout d'eau ultrapure et agités pendant 30 secondes ($c_{final}$ = 0,33%). Environ 3 mL de ce mélange sont mis dans une cassette de dialyse de 3 mL à membrane de cellulose (Slide-α-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 2 heures, 5 heures, 1 jour, 2 jours, 4 jours et 7 jours. La cassette est vigoureusement agitée avant chaque changement d'eau de dialyse. Au cours de la dialyse, la solution reste homogène et fluide et présente la coloration jaune-vert caractéristique de l'Oregon Green. Avant le changement d'eau de dialyse, le bain présente également la coloration jaune-vert caractéristique de l'Oregon Green, mais elle s'atténue progressivement au fur et à mesure des changements, jusqu'à devenir imperceptible au changement à 1 jour de dialyse.

Sans interrompre la dialyse, environ 200 μL de solution sont prélevés après 7 jours, 14 jours, 21 jours, 28 jours, 45 jours et 57 jours de dialyse. Après le dernier prélèvement, la quantité résiduelle de l'Oregon Green dans chaque échantillon est mesuré comme suit : les vésicules sont détruites par 40 μL d'une solution de Triton X-100 à 5% en masse dans l'eau est ajoutée aux 200 μL d'échantillon et chauffage à 50°C pendant quelques minutes. La destruction complète des vésicules est vérifiée par microscopie confocale. La solution est complétée à 3 mL par addition d'une solution de CTACl à 1,5 mM dans une solution-tampon de borate à pH = 9. L'émission de fluorescence à 522 nm sous excitation à 502 nm est mesurée à l'aide d'un spectromètre de fluorescence Varian Cary Eclipse pour toutes les solutions préparées à partir de chacun des échantillons prélevés. La concentration d'Oregon Green dans chaque échantillon est proportionnelle à l'émission de fluorescence à un facteur arbitraire près sans importance pour la mesure. On reporte donc la fluorecence fonction du temps de dialyse et l'ajustement de la courbe par une loi exponentielle donne la perméabilité selon l'équation : $F(t) = F_0e^{-\frac{3P_{soluté}}{R}t}$ (figure 11). Le rayon R des vésicules est estimé par microscopie confocale à 2,5 μm, ce qui permet finalement de déduire que la perméabilité des vésicules à l'Oregon Green est de 8.9 $10^{-11}$ cm/s. Le rapport de la fluorescence mesurée à partir de la solution initiale et de la fluorescence extrapolée à t = 0 permet de mesurer le taux d'encapsulation. 60% de l'Oregon Green initial est donc encapsulé.

Exemple 10 : mesure par HPLC de la fraction molaire de tensioactif pendant la dialyse.

Le mélange acide myristique/chlorure de cétyl triméthylammonium à analyser est dilué dans 4 fois sa masse en éthanol absolu. Les concentrations d'acide myristique et de cétyl triméthylammonium dans cette solution sont mesurés par HPLC à l'aide d'une colonne C18 HyPurity couplée à un réfractomètre Sedex 75 thermalisé à 40°C sous une pression d'azote de 2.9 bars. La phase continue pour la mesure est un mélange 70/15/15 en volume d'acétone/méthanol/eau acidifiée à 0.06% en volume d'acide trifluoroacétique. Le mélange est injecté à 0,5 mL/min. Dans ces conditions, le cétyl triméthylammonium et l'acide myristique produisent des pics bien séparés après des temps de migration de 3,5 et 6 minutes respectivement. L'aire sous ces pics est comparée à des courbes de calibration réalisées à partir de solutions de chlorure de cétyl triméthylammonium et d'acide myristique préparées dans le même rapport eau/éthanol, et de concentrations connues.

Cette technique permet de suivre l'évolution de la fraction molaire $r = \frac{c(myristic)}{c(myristic) + c(CTA)}$ d'acide myristique dans un mélange quelconque d'acide myristique et chlorure de cétyl triméthyl ammonium de fraction molaire initiale quelconque et de temps de dialyse quelconque (figure 12)

<u>Exemple 11 : Encapsulation spontanée d'un acide faible dans une vésicule à haut pH.</u>

On mélange 29,2 mg de myristate de sodium, 53,4 mg de N,N diméthyltetradécylamine et 8,1749 g d'eau ultrapure (r = 0,35, c = 1,00%). On laisse agiter à 50°C pendant 41 heures. Les cristaux de myristate de sodium se dissolvent progressivement et les gouttelettes huileuses du N,N diméthyltetradécylamine disparaissent progressivement pour donner une solution blanche homogène.

Environ 3 mL de cette solution sont prélevés et mis dans une cassette de dialyse de 3 mL à membrane de cellulose (Slide-a-lyzer, ThermoScientific) de seuil de coupure 3500 Da. La cassette est plongée dans un bain de dialyse d'environ 500 mL sous agitation à température ambiante. L'eau de dialyse est changée pour de l'eau ultrapure au bout de 30 minutes, 1h, 3h, 7h, 22h, 95h. La cassette est vigoureusement agitée avant chaque changement d'eau de dialyse. Avant le changement d'eau à 30 minutes, 1h, 3h, 7h et 22h de dialyse, on observe une démixtion entre une solution blanche qui surnage au-dessus d'une solution limpide. Après le changement d'eau à 22h de dialyse, il n'y a plus de démixtion observable.

Après 95h de dialyse, la solution blanche fluide est prélevée de la cassette de dialyse à l'aide d'une seringue et stockée à température ambiante.

La présence de vésicules dans la solution est contrôlée par microscopie confocale par ajout de Rhodamine 6G comme décrit plus haut. L'encapsulation spontanée d'Oregon Green est réalisée comme suit : 10 $\mu$L de solution saturée d'Oregon Green dans l'eau diluée par 10 sont ajoutés à 100 $\mu$L de la solution de vésicules. Après un temps d'attente de une minute, la microscopie confocale permet de mettre en évidence des zones très concentrées en Oregon Green (figure 13) qui correspond à l'encapsulation spontanée du colorant faiblement acide dans l'intérieur à fort pH des vésicules.

<u>Exemple 12 : Encapsulation spontanée de solutés cationiques dans des vésicules</u>

On mélange 33,8 mg d'acide myristique, 25,1 mg de chlorure de cetyltriméthylammonium et 5,76 g d'eau ultrapure (r = 0,66, $c_{initial}$ = 1,01%). On laisse agiter à 50°C pendant 72 heures. Les cristaux d'acide myristique se dissolvent progressivement pour donner une solution homogène blanche sans résidus solides.

1,67 g de cette solution sont prélevés, sont complétés à 5,00g par ajout d'eau ultrapure et agités pendant 30 secondes ($c_{final}$ = 0,33). Environ 3 mL de ce mélange sont mis dans une cassette de dialyse de 3 mL à membrane de cellulose (Slide-$\alpha$-lyzer, ThermoScientific) de seuil de coupure 3500 Da. La cassette est plongée dans un bain de dialyse d'environ 300 mL sous agitation à température ambiante. L'eau de dialyse est changée pour de l'eau ultrapure au bout de 2 heures, 5 heures, 1 jour, 2 jours et 4 jours. La cassette est vigoureusement agitée avant chaque changement d'eau de dialyse. Au cours de la dialyse, la solution reste homogène et fluide.

Après 4 jours de dialyse, la solution est prélevée de la cassette à l'aide d'une seringue et stockée à température ambiante.

L'encapsulation spontanée de la Rhodamine 6G est réalisée comme suit : environ 10 $\mu$L de Rhodamine 6G à 10$\mu$M sont ajoutés à 20$\mu$L de la solution de vésicules. Après 20 minutes, des zones très concentrées en Rhodamine 6G sont observées par microscopie confocale (Figure 14). Elles correspondent à l'intérieur des vésicules dans lequel la Rhodamine 6G s'est accumulée préférentiellement.

<u>Exemple 13 : Formation de vésicules par dialyse à bas pH</u>

On mélange 33,8 mg d'acide myristique, 25,1 mg de chlorure de cetyltriméthylammonium et 5,76 g d'eau ultrapure (r = 0,66, $c_{initial}$ = 1,01%). On laisse agiter à 50°C pendant 72 heures. Les cristaux d'acide myristique se dissolvent progressivement pour donner une solution homogène blanche sans résidus solides.

Environ 3 mL de ce mélange sont mis dans une cassette de dialyse de 3 mL à membrane de cellulose (Slide-a-Lyzer, ThermoScientific) de seuil de coupure 3500 Da. La cassette est plongée dans un bain de dialyse d'environ 300 mL de HCl à $10^{-4}$ M sous agitation à température ambiante. La solution de dialyse est remplacée par une solution de HCl à $10^{-4}$ M au bout de 2 heures, 5 heures, 1 jour, 2 jours et 4 jours. La cassette est vigoureusement agitée avant éhaque changement de solution de dialyse. Au cours de la dialyse, la solution de tensioactifs finit par former un gel blanc homogène.

Après 4 jours de dialyse, le gel est prélevé de la cassette et stocké à température ambiante. Le gel est formé des vésicules d'acide myristique et de cétyltriméthylammonium.

<u>Exemple 14 : Formation de vésicules par dialyse à haut pH</u>

On mélange 33,8 mg d'acide myristique, 25,1 mg de chlorure de cetyltriméthylammonium et 5,76 g d'eau ultrapure (r = 0,66, $c_{initial}$ = 1,01%). On laisse agiter à 50°C pendant 72 heures. Les cristaux d'acide myristique se dissolvent progressivement pour donner une solution homogène blanche sans résidus solides.

Environ 3 mL de ce mélange sont mis dans une cassette de dialyse de 3 mL à membrane de cellulose (Slide-a-Lyzer, ThermoScientific) de seuil de coupure 3500 Da. La cassette est plongée dans un bain de dialyse d'environ 300 mL de NaOH à $10^{-4}$ M sous agitation à température ambiante. La solution de dialyse est remplacée par une solution de NaOH à $10^{-4}$ M au bout de 2 heures, 5 heures, 1 jour, 2 jours et 4 jours. La cassette est vigoureusement agitée avant chaque changement de solution de dialyse. Au cours de la dialyse, la solution de tensioactifs finit par former un gel blanc homogène.

Après 4 jours de dialyse, le gel est prélevé de la cassette et stocké à température ambiante. Le gel est formé des vésicules d'acide myristique et de cétyltriméthylammonium.

**Revendications**

1. Vésicules non poreuses en dispersion dans une composition aqueuse désignée phase externe, dont les parois, qui définissent une phase interne, sont constituées d'un mélange d'au moins un tensioactif anionique à contre-ion $A^+$ et d'au moins un tensioactif cationique à contre-ion $B^-$ co-cristallisés, le couple d'ions ($A^+$, $B^-$) étant distinct du couple d'ions ($H^+$, $OH^-$) et avec au moins $A^+ = H^+$ ou $B^- = OH^-$.

2. Vésicules selon la revendication 1 qui ont une perméabilité à $H^+$ ou à $OH^-$ qui est inférieure à $5.10^{-11}$ cm/s.

3. Vésicules selon la revendication 1 ou la revendication 2, qui ont une différence de pH d'au moins 2 unités entre leur phase interne et leur phase externe, cette différence étant conservée sur une durée d'au moins 1 mois.

4. Vésicules selon l'une quelconque des revendications 1 à 3, dans lesquelles le tensio-actif cationique est choisi parmi : les ammoniums mono- et bicaténaires répondant aux formules (I) et (I') suivantes et les bases correspondantes :

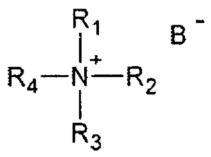 (I) 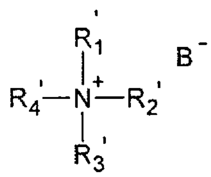 (I')

dans lesquelles :

- $R_1$, $R_2$ et $R_3$, $R'_1$ et $R'_2$, identiques ou différents, représentent un groupement choisi parmi : H, un alkyle en $C_1$-$C_4$, un hydroxyalkyle en $C_1$-$C_4$ et un alkyl($C_1$-$C_4$)éther,
- $R_4$, $R'_3$ et $R'_4$, identiques ou différents, représentent un groupement choisi parmi : une chaîne hydrocarbonée saturée ou insaturée en $C_8$-$C_{24}$, un benzyle, un aralkyle en $C_8$-$C_{24}$ ou un groupement alkyl($C_4$-$C_{20}$)ester d'alkyle ($C_4$-$C_{20}$),
- $B^-$ représente un ion choisi parmi : $OH^-$, $F^-$, $Cl^-$, $Br^-$, $I^-$, $BF_4^-$, $SO_4^{2-}$,

et le tensio-actif anionique est choisi parmi les acides carboxyliques à chaîne alkyle ou hydroxyalkyle en $C_8$-$C_{24}$, ou fluoroalkyle en $C_8$-$C_{24}$, les acides di-carboxyliques à chaîne hydrophobe carbonée en $C_8$-$C_{24}$, les phosphates, les sulfates et les sulfonates comportant une ou deux chaînes alkyle en $C_8$-$C_{24}$.

5. Vésicules selon l'une quelconque des revendications 1 à 4, à phase interne acide, dans lesquelles le tensio-actif anionique est à contre-ion $H^+$ et le tensio-actif cationique est à contre-ion $B^-$, $B^-$ étant différent de $OH^-$.

6. Vésicules selon l'une quelconque des revendications 1 à 4, à phase interne basique, dans lesquelles le tensio-actif

anionique est à contre-ion $A^+$, $A^+$ étant différent de $H^+$ et le tensio-actif cationique est à contre-ion $OH^-$.

7. Vésicules selon la revendication 5, dans lesquelles :

le tensioactifs anionique est choisi parmi les acides et les sels des acides suivants :

| Acide laurique | Acide myristique | acide myristique deutéré | Acide palmitique |
|---|---|---|---|
| 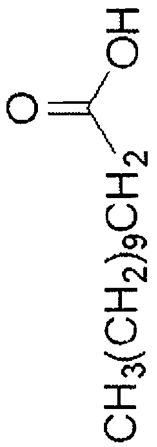 | 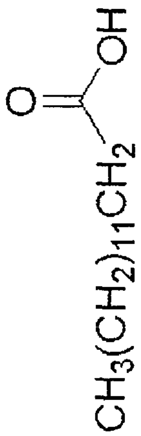 | 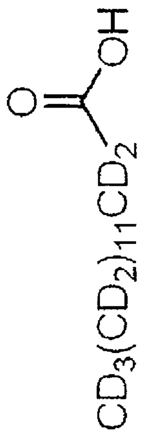 | 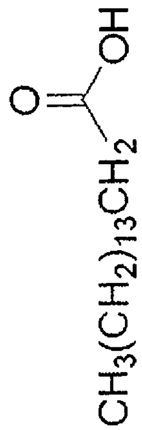 |

| Myristate de sodium |
|---|
| 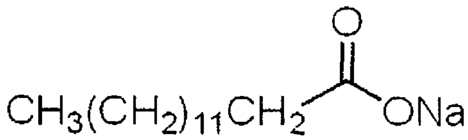 |

| Acide dodécanedioïque | Acide hexadecanedioïque | Acide 16-hydroxydécanoïque |
|---|---|---|
| 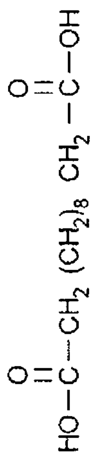 | 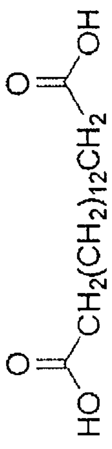 | 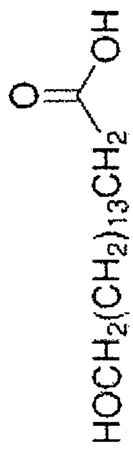 |

Le tensioactif cationique est choisi parmi :

| Bromure de cétyl triméthylammonimn | Chlorure de cétyl triméthylammonium | Bromure de myristyl trimethylammonium |
| --- | --- | --- |
| 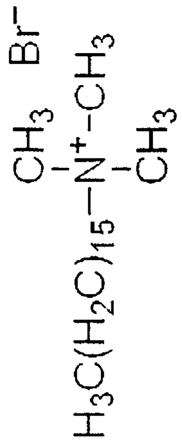 | 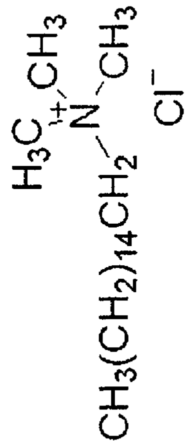 | 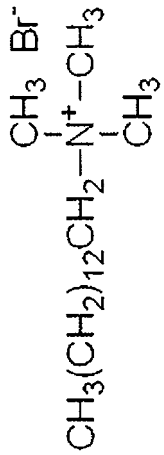 |

**8.** Vésicules selon la revendication 6, dans lesquelles le tensioactif anionique est choisi parmi :

Myristate de sodium, tétradécane sulfonate de sodium, hexadécane sulfonate de sodium,
Le tensioactif cationique est choisi parmi les amines et les sels des amines suivantes :

Tridécylamine, tétradécylamine, hexadecylamine, N,N diméthyltridécylanime, N,N diméthyltétradécylamine.

**9.** Vésicules selon l'une quelconque des revendications 1 à 8, qui comportent un principe actif encapsulé dans leur cavité interne.

**10.** Procédé pour la préparation d'une dispersion de vésicules en milieu aqueux selon l'une quelconque des revendications 1 à 9, ce procédé comprenant les étapes suivantes :

i) Mélange dans de l'eau d'au moins un tensioactif anionique à contre-ion $A^+$ et d'au moins un tensioactif cationique à contre-ion $B^-$, le couple d'ions ($A^+$, $B^-$) étant distinct du couple d'ions ($H^+$, $OH^-$) et avec au moins $A^+ = H^+$ ou $B^- = OH^-$;
ii) Chauffage de ce mélange, pendant une durée $t_{chauff}$, à une température T inférieure à la température de fusion du mélange catanionique et qui est supérieure ou égale à 40°C mais inférieure à 90°C, T et $t_{chauff}$ étant suffisantes pour obtenir la solubilisation des tensioactifs ;
iii) Dialyse de la suspension obtenue en ii) de façon à éliminer les sels de la phase externe.

**11.** Procédé selon la revendication 10, dans lequel on calcule la fraction molaire de tensioactif anionique suivant la formule :

$$r_A = \frac{n_A}{n_A + n_C}$$

$n_A$ et $n_C$, désignant respectivement le nombre de moles de tensioactif anionique et le nombre de moles de tensioactif cationique,
la fraction $r_A$ étant choisie pour chaque couple de tensioactifs, ou de mélanges de tensioactifs en suivant le protocole suivant :

a) Les tensioactifs anionique et cationique sont mélangés dans l'eau, en choisissant une fraction $r_{A1}$ au hasard, de préférence avec un excès de tensioactif cationique ;
b) Le mélange est chauffé à une température inférieure à la température de fusion du tensioactif anionique, pendant une durée supérieure ou égale à une heure ;

c) La suspension obtenue est dialysée ;
d) Au cours de la dialyse on mesure l'évolution de $r_{A1}$ dans la composition, par exemple en suivant la concentration des tensioactifs par HPLC ;
e) On observe que $r_{A1}$ atteint une valeur limite qui ne change plus et qui est indépendante de la valeur de $r_{A1}$ choisie au départ ;
f) On nomme cette valeur $r_{1(A)}$ ;
g) Les vésicules sont préparées en utilisant une valeur de $r_A$ supérieure à $r_{1(A)}$.

**12.** Procédé selon la revendication 10, dans lequel on calcule la fraction molaire de tensioactif cationique suivant la formule :

$$r_C = \frac{n_C}{n_A + n_C}$$

la fraction $r_C$ est choisie pour chaque couple de tensioactifs, ou de mélanges de tensioactifs en suivant le protocole suivant :

a) Les tensioactifs anionique et cationique sont mélangés dans l'eau, en choisissant une fraction $r_{C1}$ au hasard, de préférence avec un excès de tensioactif anionique ;
b) Le mélange est chauffé à une température inférieure à la température de fusion du tensioactif cationique $T_C$, pendant une durée supérieure ou égale à une heure ;
c) La suspension obtenue est dialysée ;
d) Au cours de la dialyse on mesure l'évolution de $r_{C1}$ dans la composition, par exemple en suivant la concentration des tensioactifs par HPLC ;
e) On observe que $r_{C1}$ atteint une valeur limite qui ne change plus et qui est indépendante de la valeur de $r_{C1}$ choisie au départ ;
f) On nomme cette valeur $r_{1(C)}$ ;
g) Les vésicules sont préparées en utilisant une valeur de $r_C$ supérieure à $r_{1(C).}$

**13.** Procédé selon l'une quelconque des revendications 10 à 12 dans lequel on ajoute à la composition issue de l'étape ii) une solution contenant un actif à encapsuler.

**14.** Procédé selon l'une quelconque des revendications 10 à 13 dans lequel on ajoute un actif à encapsuler à la composition issue de l'étape iii).

**15.** Procédé selon l'une quelconque des revendications 10 à 14 dans lequel on stabilise les vésicules par au moins un polymère adsorbé sur leur surface.

**16.** Utilisation de vésicules selon l'une quelconque des revendications 1 à 8 pour la dépollution des milieux aqueux.

**17.** Une composition cosmétique comprenant au moins une vésicule selon l'une quelconque des revendications 1 à 9.

**18.** Une composition pharmaceutique comprenant au moins une vésicule selon l'une quelconque des revendications 1 à 9.

## Claims

**1.** Non-porous vesicles dispersed in an aqueous composition constituting an external phase, the walls thereof, which define an internal phase, comprise a mixture of at least one anionic surfactant with a counter-ion $A^+$ and at least one cationic surfactant with a counter-ion $B^-$, which are co-crystallised, the ion pair ($A^+$, $B^-$) being different from the ion pair ($H^+$, $OH^-$), and where at least $A^+ = H^+$ or $B^- = OH^-$.

**2.** Vesicles as claimed in claim 1, which have a permeability to $H^+$ or to $OH^-$ which is less than $5.10^{-11}$ cm/s.

**3.** Vesicles as claimed in claim 1 or claim 2, which have a difference in pH of at least 2 units between their internal

phase and their external phase, this difference being preserved for a period of at least 1 month.

**4.** Vesicles as claimed in any one of claims 1 to 3, in which the cationic surfactant is selected from mono-catenary and bi-catenary ammonium conforming to the following formulae (1) and (1') and the corresponding bases:

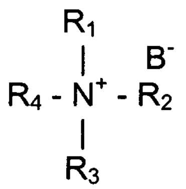
(I)

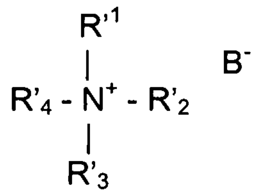
(I')

in which:

- $R_1$, $R_2$ and $R_3$, $R'_1$ and $R'_2$ are identical or different and represent a group selected from: H, a $C_1$-$C_4$ alkyl, a $C_1$-$C_4$ hydroxyalkyl and an alkyl($C_1$-$C_4$) ether,
- $R_4$, $R'_3$ and $R'_4$ are identical or different and represent a group selected from a saturated or unsaturated $C_8$-$C_{24}$ hydrocarbon chain, a benzyl, a $C_8$-$C_{24}$ aralkyl or an alkyl($C_4$-$C_{20}$)ester group of ($C_4$-$C_{20}$) alkyl,
- $B^-$ represents an ion selected from: $OH^-$, $F^-$, $Cl^-$, $Br^-$, $I^-$, $BF_4^-$, $SO_4^{2-}$,

and the anionic surfactant is selected from carboxylic acids with a $C_8$-$C_{24}$ alkyl or hydroxyalkyl chain or a $C_8$-$C_{24}$ fluoroalkyl chain, dicarboxylic acids with a hydrophobic $C_8$-$C_{24}$ carbon chain, phosphates, sulphates and sulphonates having one or two $C_8$-$C_{24}$ alkyl chains.

**5.** Vesicles as claimed in any one of claims 1 to 4, with an acid internal phase in which the anionic surfactant has the counter-ion $H^+$ and the cationic surfactant has the counter-ion $B^-$, $B^-$ being different from $OH^-$.

**6.** Vesicles as claimed in any one of claims 1 to 4, with a basic internal phase in which the anionic surfactant has the counter-ion $A^+$, $A^+$ being different from $H^+$, and the cationic surfactant has the counter-ion $OH^-$.

**7.** Vesicles as claimed in claim 5, in which:

the anionic surfactant is selected from the following acids and acid salts:

| Lauric acid | Myristic acid | Deuterated myristic acid | Palmitic acid |
|---|---|---|---|
| 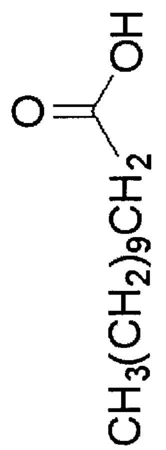 | 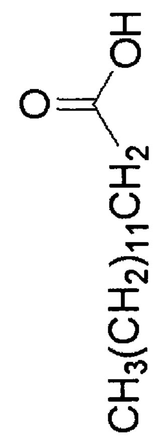 | 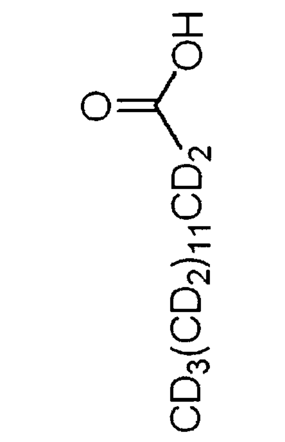 | 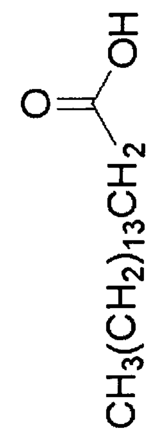 |

| Sodium myristate |
|---|
| 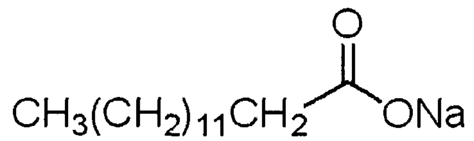 |

| Dodecanedioic acid | Hexadecanedioic acid | 16-hydroxydecanoique acid |
|---|---|---|
| 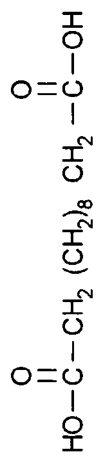 | 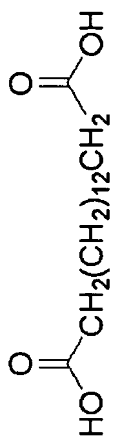 | 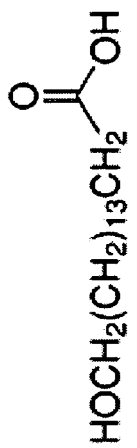 |

The cationic surfactant is selected from:

| Ketyl trimethyl ammonium bromide | Ketyl trimethyl ammonium chloride | Myristyl trimethyl ammonium bromide |
|---|---|---|
| 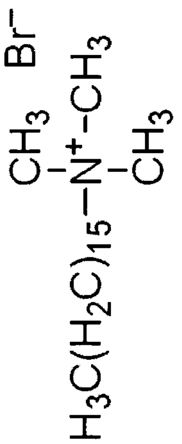 | 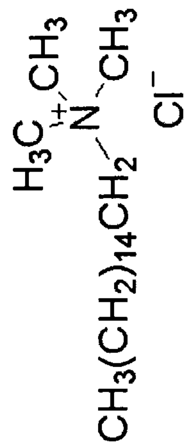 | 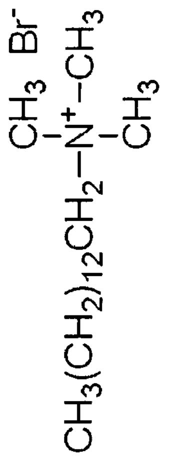 |

**8.** Vesicles as claimed in claim 6, in which the anionic surfactant is selected from:

sodium myristate, sodium tetradecane sulphate, sodium hexadecane sulphonate,
and the cationic surfactant is selected from the following amines and amine salts:

tridecylamine, tetradecylamine, hexadecylamine, N,N dimethyltridecylamine, N,N dimethyltetradecylamine.

**9.** Vesicles as claimed in any one of claims 1 to 8, having an active principle encapsulated in their internal cavity.

**10.** Method of preparing a dispersion of vesicles in an aqueous medium as claimed in any one of claims 1 to 9, this method comprising the following steps:

i) mixing in water at least one anionic surfactant with a counter-ion $A^+$ and at least one cationic surfactant with a counter-ion $B^-$, the ion pair ($A^+$, $B^-$) being different from the ion pair ($H^+$, $OH^-$) and where at least $A^+ = H^+$ or $B^- = OH^-$;
ii) heating this mixture for a time $t_{heat}$ to a temperature T below the melting point of the catanionic mixture which is greater than or equal to 40°C but less than 90°C, T and $t_{heat}$ being sufficient to obtain a dissolution of the surfactants;
iii) subjecting the suspension obtained in ii) to dialysis in order to remove the salts from the external phase.

**11.** Method as claimed in claim 10, in which the molar fraction of the anionic surfactant is calculated on the basis of the following formula:

$$r_A = \frac{n_A}{n_A + n_C}$$

$n_A$ and $n_C$ respectively designating the number of moles of anionic surfactant and the number of moles of cationic surfactant,
the fraction $r_A$ being selected for each pair of surfactants or mixtures of surfactants obtained in accordance with the following protocol:

a) the anionic and cationic surfactants are mixed in water, selecting a fraction $r_{A1}$ at random, preferably with a surplus of cationic surfactant;
b) the mixture is heated to a temperature below the melting point of the anionic surfactant for a period greater than or equal to one hour;
c) the suspension obtained is subjected to dialysis;
d) during dialysis, the change in $r_{A1}$ in the composition is measured, for example by monitoring the concentration of surfactants by HPLC;
e) $r_{A1}$ is observed to have reached a limit value which no longer changes and which is independent of the value of $r_{A1}$ chosen at the start;
f) this value is expressed as $r_{1(A)}$;
g) the vesicles are prepared using a value for $r_A$ that is greater than $r_{1(A)}$.

**12.** Method as claimed in claim 10, in which the molar fraction of cationic surfactant is calculated on the basis of the following formula:

$$r_C = \frac{n_C}{n_A + n_C}$$

the fraction $r_C$ being chosen for each pair of surfactants, or mixtures of surfactants obtained in accordance with the following protocol:

a) the anionic and cationic surfactants are mixed in water, selecting a fraction $r_{C1}$ at random, preferably with a surplus of anionic surfactant;
b) the mixture is heated to a temperature below the melting point $T_C$ of the cationic surfactant for a period greater than or equal to one hour;
c) the suspension obtained is subjected to dialysis;
d) during dialysis, the change in $r_{C1}$ in the composition is measured, for example by monitoring the concentration of surfactants by HPLC;
e) $r_{C1}$ is observed to have reached a limit value which no longer changes and which is independent of the value of $r_{C1}$ chosen at the start;
f) this value is expressed as $r_{1(C)}$;
g) the vesicles are prepared using a value for $r_C$ that is greater than $r_{1(C)}$.

**13.** Method as claimed in any one of claims 10 to 12, in which a solution containing an active substance to be encapsulated is added to the composition obtained from step ii).

**14.** Method as claimed in any one of claims 10 to 13, in which an active substance to be encapsulated is added to the composition obtained from step iii).

**15.** Method as claimed in any one of claims 10 to 14, in which the vesicles are stabilised by means of at least one polymer adsorbed on their surface.

**16.** Use of vesicles as claimed in any one of claims 1 to 8 to decontaminate aqueous environments.

**17.** Cosmetic composition comprising at least one vesicle as claimed in any one of claims 1 to 9.

**18.** Pharmaceutical composition comprising at least one vesicle as claimed in any one of claims 1 to 9.

**Patentansprüche**

**1.** Nicht-poröse Vesikel in Dispersion in einer wässrigen Zusammensetzung, die äußere Phase genannt wird, deren Wände, die eine innere Phase definieren, aus einem Gemisch aus wenigstens einer anionischen grenzflächenaktiven Substanz mit Gegenion $A^+$ und wenigstens einer kationischen grenzflächenaktiven Substanz mit Gegenion $B^-$, die cokristallisiert sind, bestehen, wobei das Ionenpaar ($A^+$, $B^-$) von dem Ionenpaar ($H^+$, $OH^-$) verschieden ist und wobei wenigstens $A^+ = H^+$ oder $B^- = OH^-$.

**2.** Vesikel gemäß Anspruch 1, die eine Permeabilität für $H^+$ oder $OH^-$ haben, die unter $5{\cdot}10^{-11}$ cm/s ist.

**3.** Vesikel gemäß Anspruch 1 oder Anspruch 2, die eine Differenz des pH von wenigstens zwei Einheiten zwischen ihrer inneren Phase und ihrer äußeren Phase haben, wobei diese Differenz über eine Dauer von wenigstens einem Monat konserviert wird.

**4.** Vesikel gemäß einem der Ansprüche 1 bis 3, in denen die kationische grenzflächenaktive Substanz ausgewählt ist aus: ein- und zweikettigen Ammonium, die den folgenden Formeln (I) und (I') entsprechen, und den entsprechenden Basen:

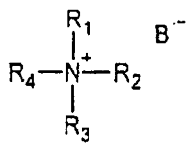 (I) 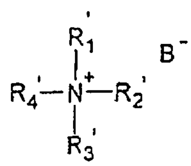 (I')

in denen:

- $R_1$, $R_2$ und $R_3$, $R'_1$ und $R'_2$, die identisch oder unterschiedlich sind, eine Gruppierung darstellen, die ausgewählt ist aus: H, $C_1$-$C_4$-Alkyl, $C_1$-$C_4$-Hydroxyalkyl und ($C_1$-$C_4$) Alkylether,
- $R_4$, $R'_3$ und $R'_4$, die identisch oder unterschiedlich sind, eine Gruppierung darstellen, ausgewählt aus: einer gesättigten oder ungesättigten $C_8$-$C_{24}$-Kohlenwasserstoffkette, einem Benzyl, einem $C_8$-$C_{24}$-Aralkyl oder einer Gruppierung ($C_4$-$C_{20}$)-Alkylester von ($C_4$-$C_{20}$)-Alkyl,
- $B^-$ ein Ion darstellt, ausgewählt aus: $OH^-$, $F^-$, $Cl^-$, $Br^-$, $I^-$, $BF_4^-$, $SO_4^{2-}$,

und die anionische grenzflächenaktive Substanz ausgewählt ist aus Carbonsäuren mit einer $C_8$-$C_{24}$-Alkyl- oder Hydroxyalkylkette oder $C_8$-$C_{24}$-Fluoralkylkette, Dicarbonsäuren mit hydrophober $C_8$-$C_{24}$-Kohlenstoffkette, Phosphaten, Sulfaten und Sulfonaten, die eine oder zwei $C_8$-$C_{24}$-Alkylketten umfassen.

**5.** Vesikel gemäß einem der Ansprüche 1 bis 4 mit innerer saurer Phase, wobei die anionische grenzflächenaktive Substanz das Gegenion $H^+$ hat und die kationische grenzflächenaktive Substanz das Gegenion $B^-$ hat, wobei $B^-$ von $OH^-$ verschieden ist.

**6.** Vesikel gemäß einem der Ansprüche 1 bis 4 mit innerer basischer Phase, wobei die anionische grenzflächenaktive Substanz das Gegenion $A^+$ hat, wobei $A^+$ von $H^+$ verschieden ist, und wobei die kationische grenzflächenaktive Substanz das Gegenion $OH^-$ hat.

**7.** Vesikel gemäß Anspruch 5, wobei:

die anionische grenzflächenaktive Substanz aus den folgenden Säuren und den Salzen der Säuren ausgewählt ist:

| Laurinsäure | Myristinsäure | deuterierte Myristinsäure | Palmitinsäure |
| --- | --- | --- | --- |
| 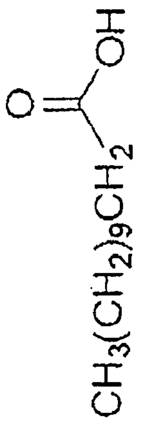 | 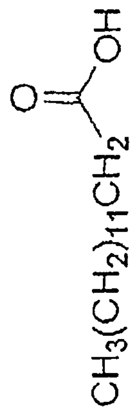 | 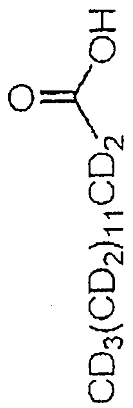 | 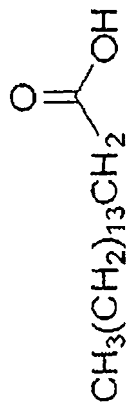 |

| Natriummyristat |
| --- |
| 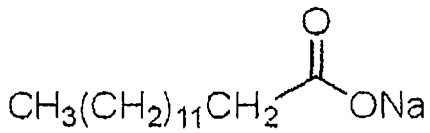 |

| Dodecandisäure | Hexadecandisäure | 16-Hydroxydecansäure |
| --- | --- | --- |
| 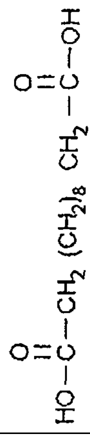 | 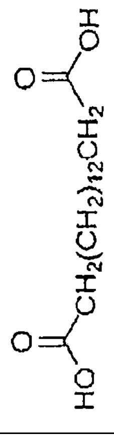 | 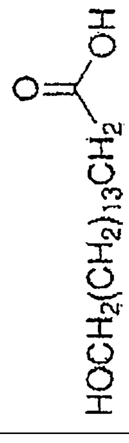 |

die kationische grenzflächenaktive Substanz ausgewählt ist aus:

| Cetyltrimethyl-ammoniumbromid | Cetyltrimethyl-ammoniumchlorid | Myristyltrimethyl-ammoniumbromid |
|---|---|---|
| 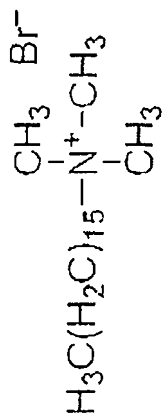 | 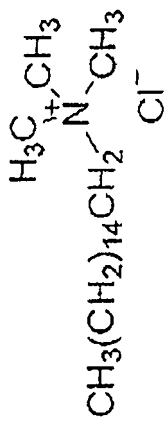 | 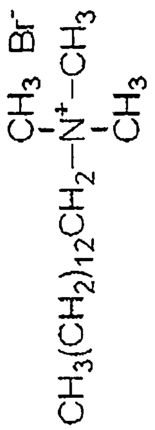 |

**8.** Vesikel gemäß Anspruch 6, in denen die anionische grenzflächenaktive Substanz ausgewählt ist aus:

Natriummyristat, Natriumtetradecansulfonat, Natriumhexadecansulfonat,
die kationische grenzflächenaktive Substanz ausgewählt ist aus folgenden Aminen und Salzen der Amine:

Tridecylamin, Tetradecylamin, Hexadecylamin, N,N-Dimethyltridecylamin, N,N-Dimethyltetradecylamin.

**9.** Vesikel gemäß einem der Ansprüche 1 bis 8, die einen Wirkstoff eingekapselt in ihrem inneren Hohlraum umfassen.

**10.** Verfahren zur Herstellung einer Dispersion von Vesikeln in wässrigem Milieu gemäß einem der Ansprüche 1 bis 9, wobei das Verfahren die folgenden Stufen umfasst:

i) Mischen in Wasser wenigstens einer anionischen grenzflächenaktiven Substanz mit Gegenion $A^+$ und wenigstens einer kationischen grenzflächenaktiven Substanz mit Gegenion $B^-$, wobei das Ionenpaar ($A^+$, $B^-$) vom Ionenpaar ($H^+$, $OH^-$) verschieden ist und wobei wenigstens $A^+ = H^+$ oder $B^- = OH^-$;
ii) Erwärmen dieses Gemisches während einer Dauer $t_{chauff}$ auf eine Temperatur T unterhalb der Schmelztemperatur des katanionischen Gemisches, die über oder gleich 40°C, aber unter 90°C ist, wobei T und $t_{chauff}$ ausreichend sind, um die Solubilisierung der grenzflächenaktiven Substanzen zu erreichen;
iii) Dialyse der in ii) erhaltenen Suspension derart, dass die Salze der äußeren Phase eliminiert werden.

**11.** Verfahren gemäß Anspruch 10, in dem man die Molfraktion an anionischer grenzflächenaktiver Substanz gemäß der Formel:

$$r_A = \frac{n_A}{n_A + n_C}$$

errechnet, wobei $n_A$ und $n_C$ jeweils die Anzahl der Mol an anionischer grenzflächenaktiver Substanz und die Anzahl der Mol an kationischer grenzflächenaktiver Substanz bezeichnen, die Fraktion $r_A$ für jedes Paar an grenzflächenaktiven Substanzen oder Mischungen von grenzflächenaktiven Substanzen entsprechend dem folgenden Protokoll gewählt wird:

a) die anionischen und kationischen grenzflächenaktiven Substanzen werden in Wasser gemischt, wobei eine Fraktion $r_{A1}$ beliebig gewählt wird, vorzugsweise mit einem Überschuss an kationischer grenzflächenaktiver Substanz;
b) das Gemisch wird bei einer Temperatur unter der Schmelztemperatur der anionischen grenzflächenaktiven Substanz während einer Zeitdauer, die über einer Stunde liegt oder gleich einer Stunde ist, erwärmt;
c) die erhaltene Suspension wird dialysiert;
d) im Verlauf der Dialyse misst man die Entwicklung von $r_{A1}$ in der Zusammensetzung, beispielsweise indem man die Konzentration der grenzflächenaktiven Substanzen durch HPLC verfolgt;

e) man beobachtet, dass $r_{AI}$ einen Grenzwert erreicht, der sich nicht mehr ändert und der unabhängig vom Wert von $r_{A1}$, der zu Beginn gewählt worden war, ist;
f) man nennt diesen Wert $r_{I(A)}$ ;
g) die Vesikel werden hergestellt, indem man einen Wert für $r_A$ verwendet, der über $r_{I(A)}$ liegt.

**12.** Verfahren gemäß Anspruch 10, wobei man die Molfraktion an kationischer grenzflächenaktiver Substanz nach der Formel:

$$r_C = \frac{n_C}{n_A + n_C}$$

errechnet;
wobei die Fraktion $r_C$ für jedes Paar an grenzflächenaktiven Substanzen oder Mischungen von grenzflächenaktiven Substanzen entsprechend dem folgenden Protokoll gewählt wird:

a) die anionischen und kationischen grenzflächenaktiven Substanzen werden in Wasser gemischt, wobei eine Fraktion $r_{CI}$ beliebig gewählt wird, vorzugsweise mit einem Überschuss an anionischer grenzflächenaktiver Substanz;
b) das Gemisch wird bei einer Temperatur unter der Schmelztemperatur der kationischen grenzflächenaktiven Substanz $T_C$ während einer Zeitdauer erwärmt, die über einer Stunde liegt oder gleich einer Stunde ist;
c) die erhaltene Suspension wird dialysiert;
d) im Verlauf der Dialyse misst man die Entwicklung von $r_{CI}$ in der Zusammensetzung, zum Beispiel indem man die Konzentration der grenzflächenaktiven Substanzen durch HPLC verfolgt;
e) man beobachtet, dass $r_{CI}$ einen Grenzwert erreicht, der sich nicht mehr ändert und der vom zu Beginn ausgewählten Wert von $r_{CI}$ unabhängig ist;
f) man nennt diesen Wert $r_{I(C)}$ ;
g) die Vesikel werden hergestellt, indem ein Wert von $r_C$ verwendet wird, der über $r_{I(C)}$ liegt.

**13.** Verfahren gemäß einem der Ansprüche 10 bis 12, wobei man zu der Zusammensetzung aus Stufe ii) eine Lösung gibt, die einen einzukapselnden Wirkstoff enthält.

**14.** Verfahren gemäß einem der Ansprüche 10 bis 13, wobei man einen einzukapselnden Wirkstoff zu der Zusammensetzung aus Stufe iii) gibt.

**15.** Verfahren gemäß einem der Ansprüche 10 bis 14, wobei man die Vesikel durch wenigstens ein Polymer, das an ihrer Oberfläche adsorbiert wird, stabilisiert.

**16.** Verwendung von Vesikeln gemäß einem der Ansprüche 1 bis 8 zur Beseitigung einer Verschmutzung von wässrigen Milieus.

**17.** Kosmetische Zusammensetzung, die wenigstens ein Vesikel gemäß einem der Ansprüche 1 bis 9 umfasst.

**18.** Pharmazeutische Zusammensetzung, die wenigstens ein Vesikel gemäß einem der Ansprüche 1 bis 9 umfasst.

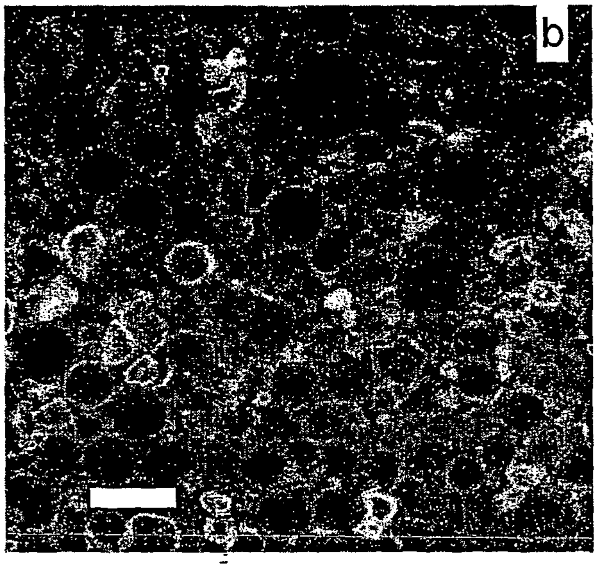


Figure 1

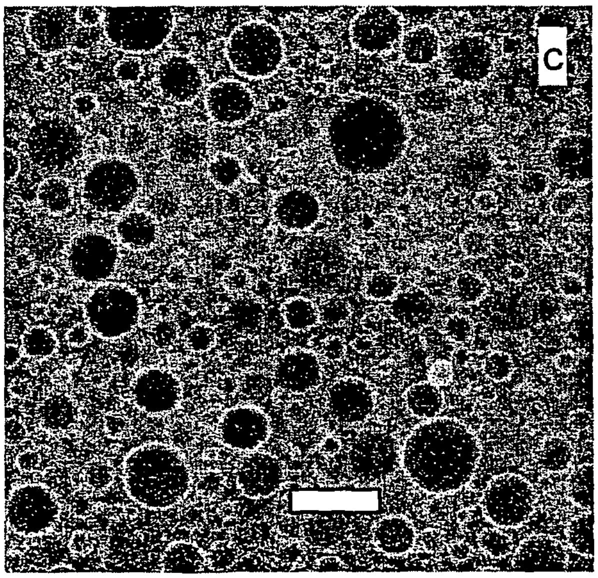


Figure 2

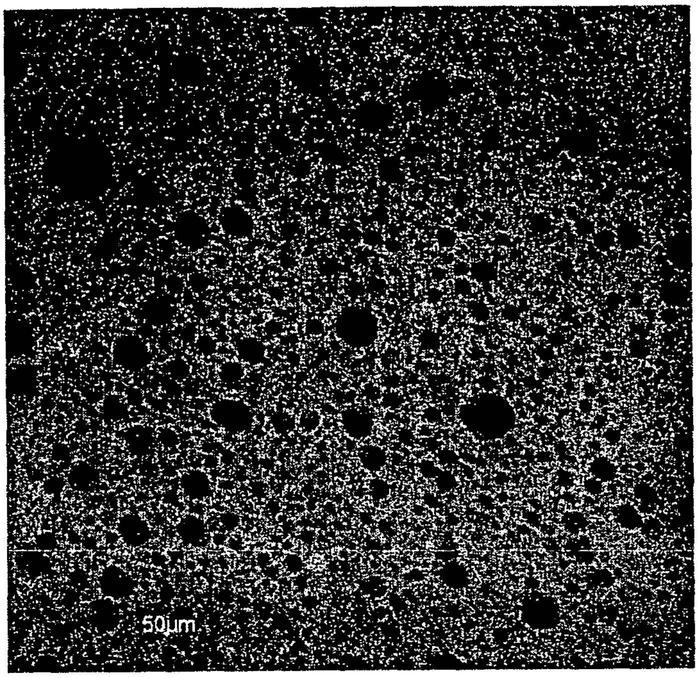


Figure 3

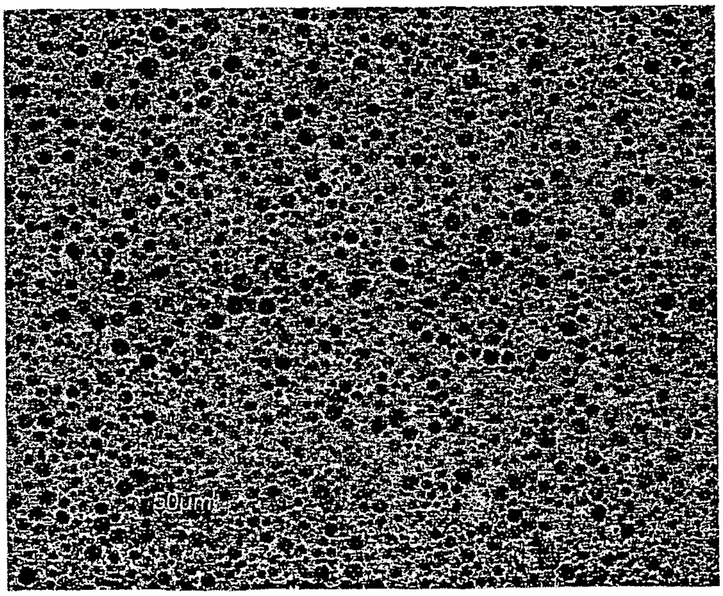


Figure 4

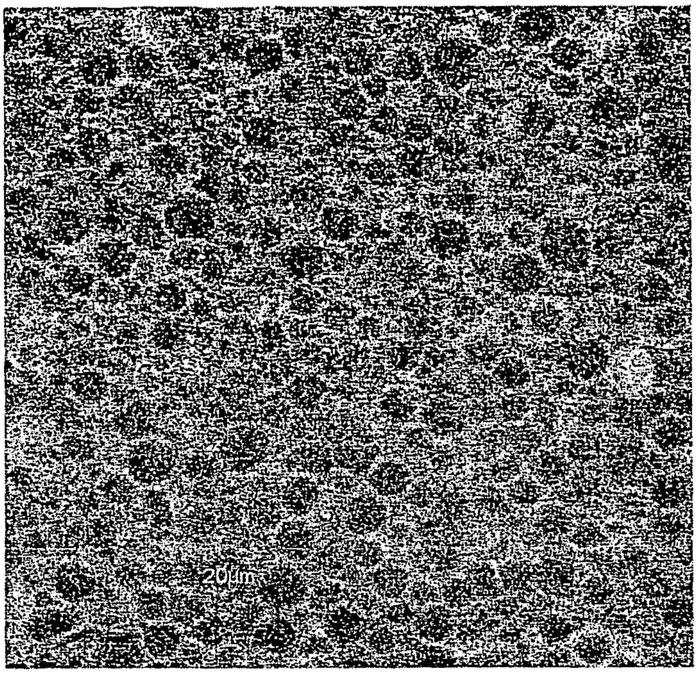


Figure 5

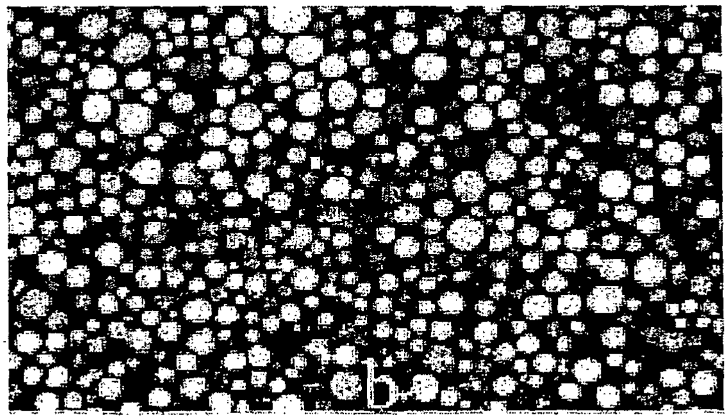


Figure 6

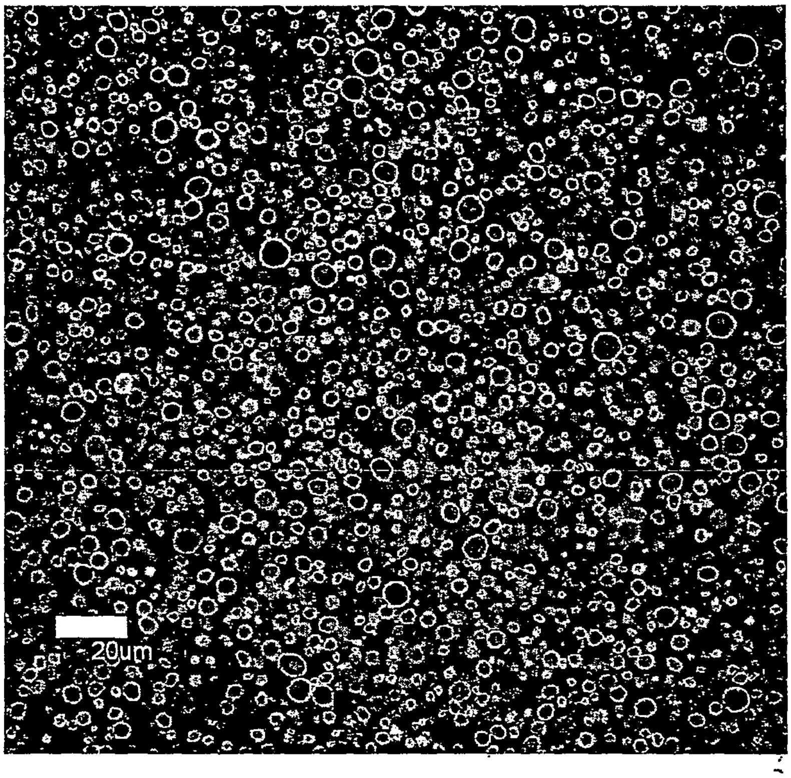


Figure 7

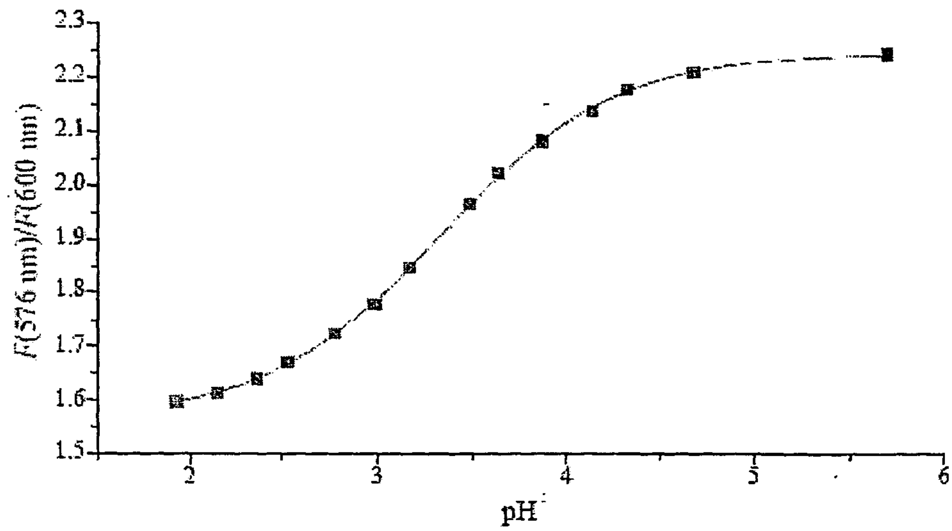


Figure 8

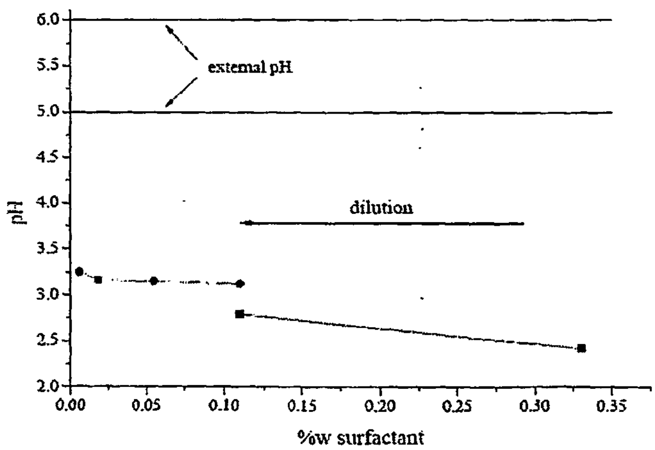


Figure 9

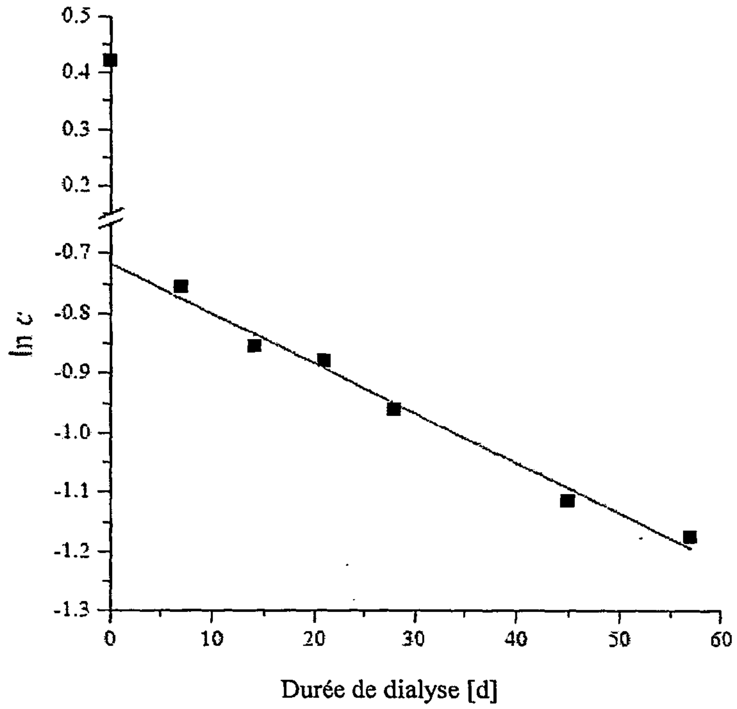


Figure 10

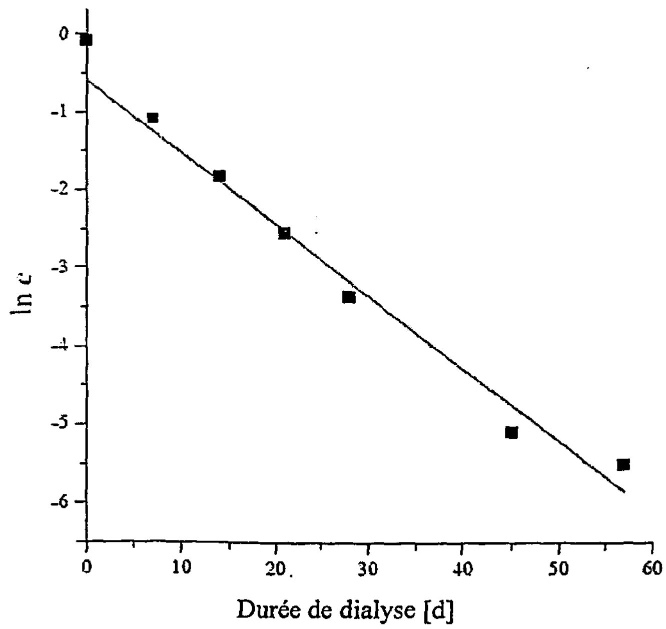


Figure 11

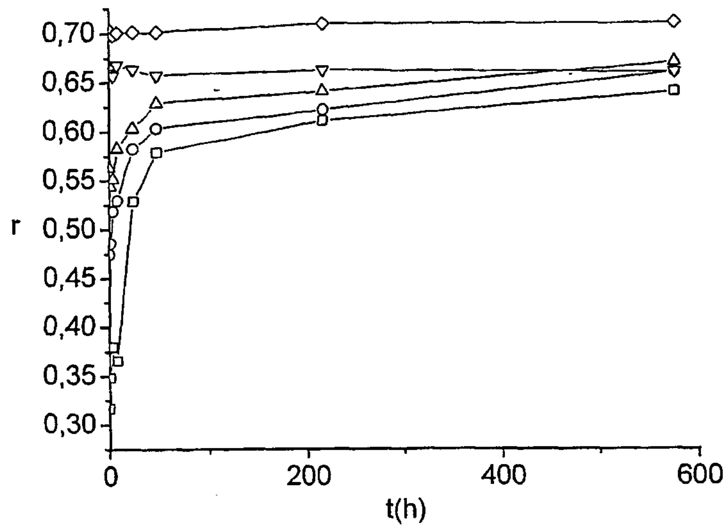


Figure 12

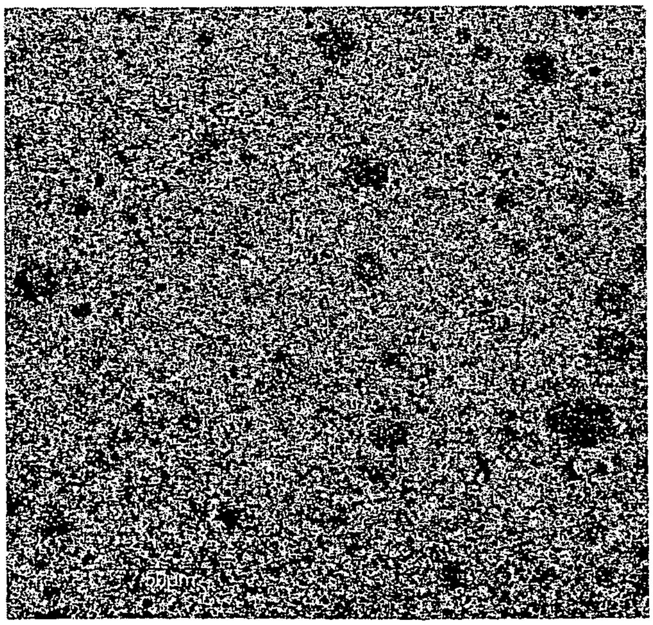

Figure 13

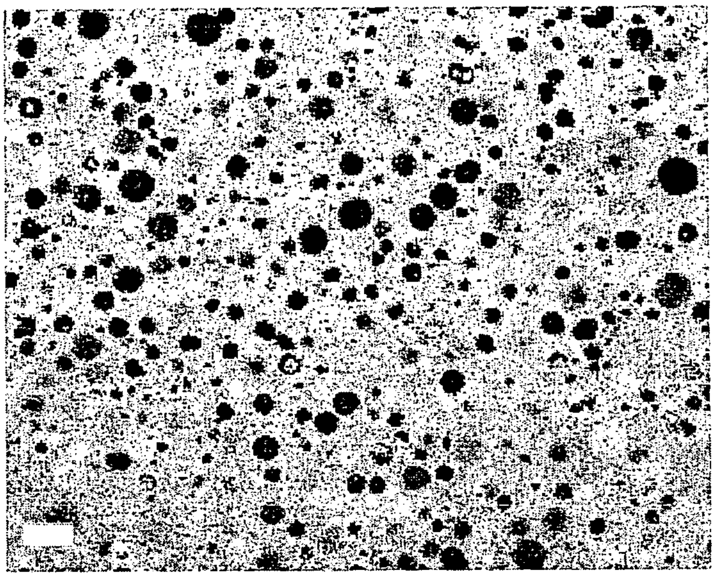

Figure 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2005089927 A
- EP 1846152 A
- FR 2880032 A
- FR 2880032
- WO 2006070095 A


### Littérature non-brevet citée dans la description


- **DUBOIS M. et al.** *C. R. Acad. Sci. Paris II C,* 1998, vol. 1 (9), 567-565
- **ZEMB T. et al.** *Science,* 1999, vol. 283, 816-819
- **DUBOIS M. et al.** *Nature,* 2001, vol. 411, 672-675
- **GLINEL, K. et al.** *Langmuir,* 2004, vol. 20, 8546-8551
- **C. GRABIELLE-MADELMONT et al.** *Journal Of Biochemical And Biophysical Methods,* Juin 2003, vol. 56 (1-3), 189-217
- Handbook of Applied Surface and Colloid Chemistry. Wiley-VCH, 2002, vol. 2